# EUROPEAN PATENT APPLICATION

(11) **EP 4 778 672 A2**
(43) Date of publication of application: **22.07.2026**
(21) Application number: 26182780.2
(22) Date of filing: 24.02.2023
(51) Int. Cl.: B23Q 11/08

(54) **CUTTING MACHINE**

(30) Priority: 28.02.2022 JP 2022029554
(62) Divisional of application: 23760125.7
(71) Applicant: DGSHAPE Corporation, Hamamatsu-shi, Shizuoka 431-2103 (JP)
(72) Inventor: DODO, Shinpei, Hamamatsu-shi, 431-2103 (JP)
(74) Representative: Grünecker Patent- und Rechtsanwälte PartG mbB

(57) **Abstract**

A cutting machine 10 includes: a holder holding a cut object 1; a machining chamber 120 housing the holder 20; a cutter 50 that cuts the cut object 1 held by the holder 20; a mover 60 that moves the cutter 50; a first housing chamber 150 housing the mover 60; an exhaust duct 92 communicating with the machining chamber 120; and an intake port 152 communicating with the first housing chamber 150. The first housing chamber 150 includes a first wall 120U separating the first housing chamber 150 from the machining chamber 120, and a first opening 125 that is open at the first wall 120U and allows at least a portion of the cutter 50 to pass therethrough.

## Description

### TECHNICAL FIELD

The present invention relates to a cutting machine.

### BACKGROUND ART

Cutting machines that produce dental products and other products by cutting cut objects are known to date. Patent Document 1, for example, discloses a cutting machine whose inside is partitioned into a plurality of areas including a machining area and a housing area. The machining area houses a holder that holds a cut object. The housing area houses a cutter that performs cutting on a cut object and an actuator that moves the cutter.

The cutting machine described in Patent Document 1 includes an intake port that is open at the top panel of a machining chamber and an exhaust port that is open at a lower wall surface of the machining chamber and connected to a dust collector. Patent Document 1 describes that the configuration including the intake port and the exhaust port causes air to flow from an upper side toward a lower side and prevents cut chips generated during cutting from scattering.

### CITATION LIST

### Patent Document

Patent Document 1: JP2017-142617A

### SUMMARY OF INVENTION

### Technical Problems

In the cutting machine disclosed in Patent Document 1, cutting chips carried by wind flowing in the machining chamber easily enter the housing area. Although the machining area and the housing area are separated by a wall, the wall has an opening through which the cutter passes. The wind flowing in the machining chamber partially blows to this opening. Accordingly, cut chips carried by the wind flowing in the machining chamber easily enter the housing area. The cut chips that have entered the housing area adhere to a mover that moves the cutter. Since the mover has a movable part, adherence of dust to the mover might cause failures of the mover disadvantageously.

The present invention has been made in view of the above, and an object thereof is to provide a cutting machine capable of reducing adherence of cut chips to a mover that moves a cutter. Solution to Problem

A cutting machine disclosed here includes: a holder that holds a cut object; a machining chamber that houses the holder; a cutter that cuts the cut object held by the holder; a mover that moves the cutter; a first housing chamber that houses the mover; an exhaust duct communicating with the machining chamber; and an intake port communicating with the first housing chamber. The first housing chamber includes a first wall separating the first housing chamber from the machining chamber, and a first opening that is open at the first wall and allows at least a portion of the cutter to pass therethrough.

According to the cutting machine, a flow of wind occurs from the intake port into the machining chamber through the first housing chamber and the first opening, and is discharged from the machining chamber passing through the exhaust duct communicating with the machining chamber. This suppresses entry of cut chips generated in the machining chamber into the first housing chamber through the first opening. The first housing chamber houses the mover. Thus, the cutting machine suppresses adherence of cut chips generated in the machining chamber to the mover.

### BRIEF DESCRIPTION OF THE DRAWINGS

[FIG. 1] A perspective view of a cutting machine according to one embodiment.
[FIG. 2] A plan view of a cut object and an adaptor.
[FIG. 3] A longitudinal cross-sectional view of the cutting machine when seen from the left.
[FIG. 4] A longitudinal cross-sectional view of the cutting machine when seen from the right.
[FIG. 5] A plan view of a workpiece holder.
[FIG. 6] A longitudinal cross-sectional view illustrating the cutting machine while adaptors are being changed.
[FIG. 7] A perspective view of a cutter chamber and a driver chamber.
[FIG. 8] A plan view of a tool container.
[FIG. 9] A partially broken side view near a lower end of a main shaft.
[FIG. 10] A side view near a tip of a cutter during changing of cutting tools.
[FIG. 11] A block diagram of the cutting machine.
[FIG. 12] A flowchart of the entire process.
[FIG. 13] A flowchart of workpiece cleaning.
[FIG. 14] A side view illustrating the workpiece holder during workpiece cleaning.
[FIG. 15] A plan view of the workpiece holder showing a procedure of workpiece cleaning.
[FIG. 16] A flowchart of machining chamber cleaning.
[FIG. 17] A longitudinal cross-sectional view of the cutting machine during machining chamber cleaning.

### DESCRIPTION OF EMBODIMENTS

A cutting machine according to one embodiment will be described hereinafter with reference to the drawings. The embodiment described herein is, of course, not intended to limit the present invention. Elements and features having the same functions are denoted by the same reference characters, and description for the same elements and features will not be repeated or will be simplified as appropriate.

### [Configuration of Cutting Machine]

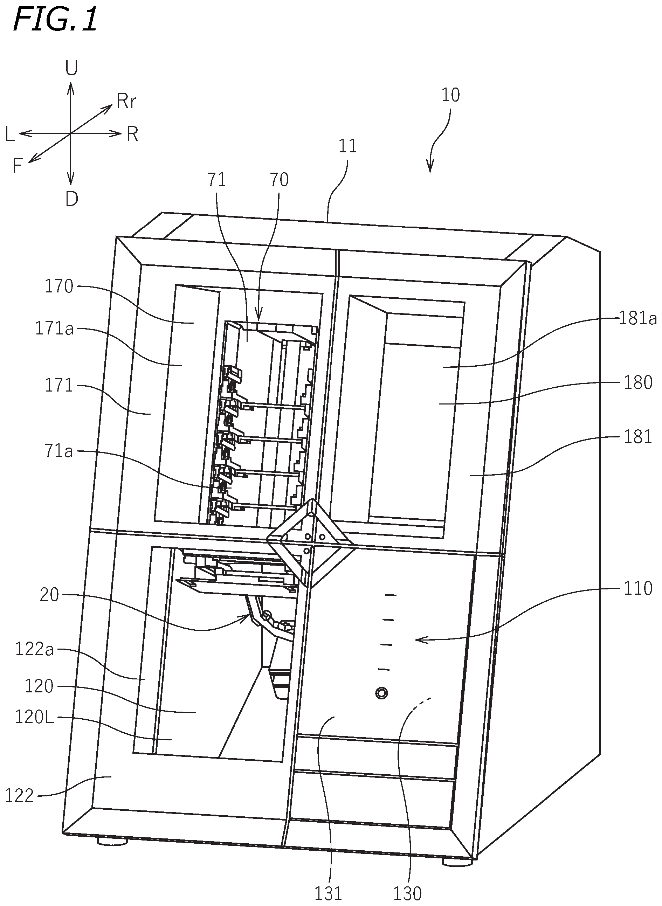

FIG. 1 is a perspective view of a cutting machine 10 according to one embodiment. In the following description, when the cutting machine 10 is seen from the front, a direction away from the cutting machine 10 will be referred to as forward, and a direction toward the cutting machine 10 will be referred to as rearward. Left, right, up, and down respectively refer to left, right, up, and down when the cutting machine 10 is seen from the front. Characters F, Rr, L, R, U, and D in the drawings respectively represent front, rear, left, right, up, and down.

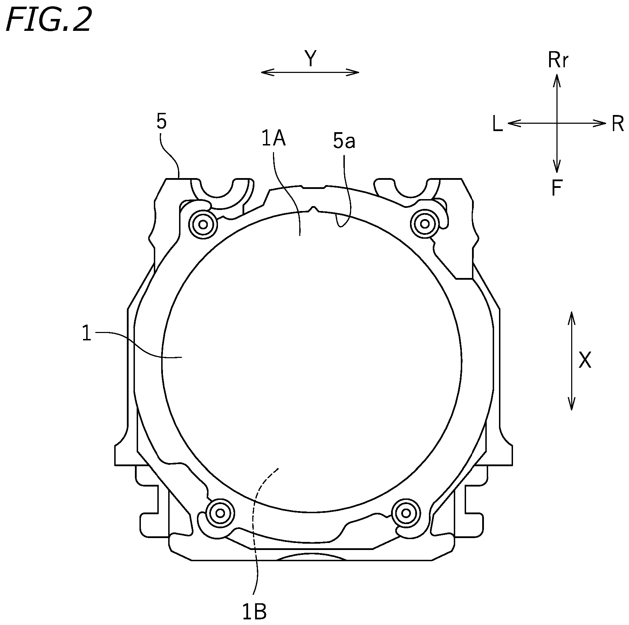

The cutting machine 10 according to this embodiment is a cutting machine that performs cutting on a disc-shaped cut object held by an adaptor. FIG. 2 is a plan view of a cut object 1 and an adaptor 5. The cutting machine 10 herein is a device that produces dental products such as crown prosthetics such as crowns, bridges, copings, inlays, onlays, veneers, or custom abutments, artificial teeth, denture bases, and other products, by cutting the cut object 1. The cutting machine 10 according to this embodiment is a dry-type cutting machine using no coolant.

Examples of constituents of the cut object 1 include resins such as PMMA, PEEK, glass fiber reinforced resin, and hybrid resin, ceramic materials such as glass ceramic and zirconia, metal materials such as cobalt-chromium sintered metal, wax, and gypsum. In the case of using zirconia as a material for the cut object 1, semi-sintered zirconia is used, for example. The cut object 1 is a flat-plate cut object including two opposed surfaces. The cut object 1 herein has a disc (disk) shape. The cut object 1 may have other shapes such as a block shape (e.g., cube or rectangular solid). The two opposed surfaces of the cut object 1 will be hereinafter also referred to as a first surface 1A and a second surface 1B, respectively. The second surface 1B is a back surface of the first surface 1A. The first surface 1A and the second surface 1B are distinguished for convenience of description, and in this embodiment, the first surface 1A and the second surface 1B of the cut object 1 before machining are the same. The first surface 1A and the second surface 1B of the cut object 1 before machining may be configured to be distinguishable.

The adaptor 5 holds the disc-shaped cut object 1. The adaptor 5 herein is a flat-plate adaptor in which a substantially circular insertion hole 5a corresponding to the cut object 1 is formed at the center. The cut object 1 is inserted in the insertion hole 5a to be thereby held by the adaptor 5. The cut object 1 is housed in the cutting machine 10 and machined while being held by the adaptor 5.

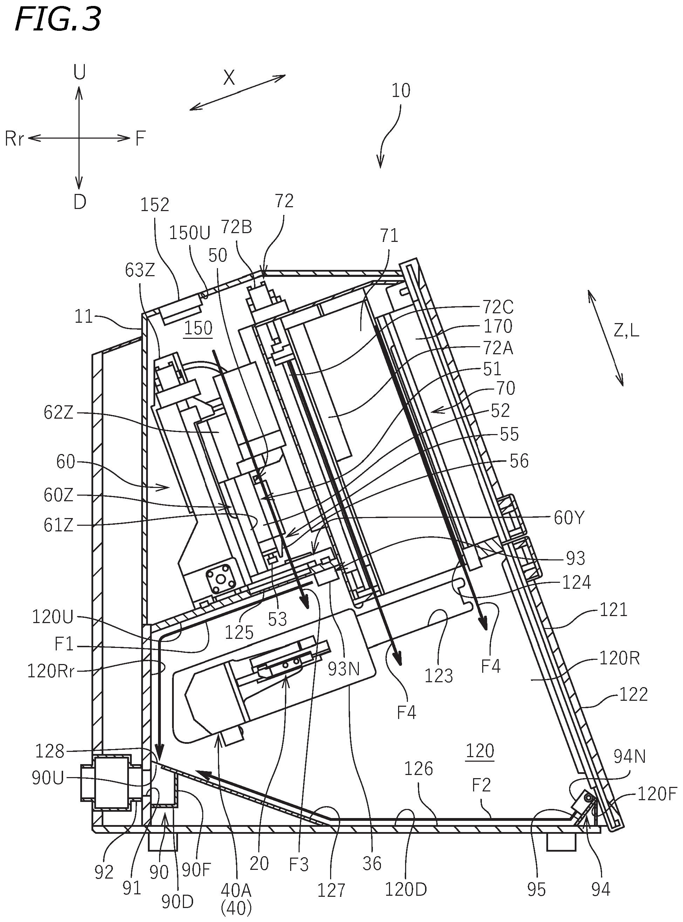

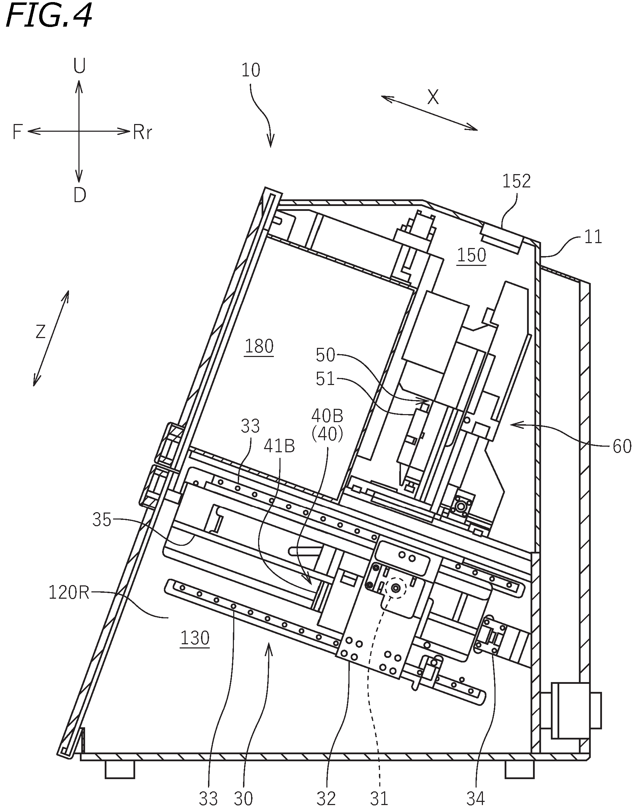

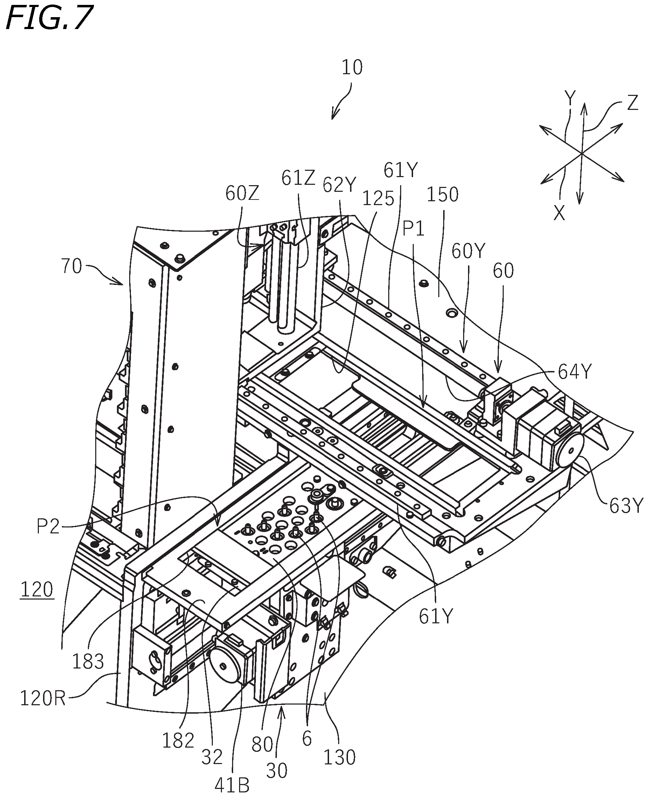

As illustrated in FIG. 1, the cutting machine 10 includes a box-shaped casing 11. FIG. 3 is a longitudinal cross-sectional view of the cutting machine 10 when seen from the left. FIG. 4 is a longitudinal cross-sectional view of the cutting machine 10 when seen from the right. As illustrated in FIG. 1, the inside of the casing 11 is partitioned into a plurality of spaces including: a machining chamber 120 (see also FIG. 3) in which a workpiece holder 20 holding the adaptor 5 is housed; a driver chamber 130 in which a holder mover 30 (see FIG. 4) for moving the workpiece holder 20 is housed, a changer chamber 170 in which a workpiece changer 70 is housed; and a tool replacement chamber 180 for accommodating cutting tools 6 (see FIG. 7) in a tool container 80 (see also FIG. 7).

As illustrated in FIG. 1, the machining chamber 120 is located in a lower left portion of the casing 11. As illustrated in FIG. 3, the machining chamber 120 extends to the rear end of the casing 11. The changer chamber 170 is located above a front side portion of the machining chamber 120. The changer chamber 170 extends to a center portion of the casing 11 in the front-rear direction. The driver chamber 130 is located at the right of the machining chamber 120. As illustrated in FIG. 4, the driver chamber 130 extends to the rear end of the casing 11. The tool replacement chamber 180 is located above a front side portion of the driver chamber 130. The tool replacement chamber 180 extends to a center portion of the casing 11 in the front-rear direction. The driver chamber 130 may be located at the left of the machining chamber 120. In this case, the tool replacement chamber 180 may be located at the left of the changer chamber 170.

A machining chamber door 122 is attached to a front opening portion 121 (see FIG. 3) of the machining chamber 120 to be freely opened and closed. A driver chamber cover 131 is attached to a front opening portion of the driver chamber 130. A changer chamber door 171 is attached to a front opening portion of the changer chamber 170 to be freely opened and closed. A tool replacement chamber door 181 is attached to a front opening portion of the tool replacement chamber 180 to be freely opened and closed. The machining chamber door 122, the changer chamber door 171, and the tool replacement chamber door 181 have transparent windows 122a, 171a, and 181a, respectively, such that the inside of the chambers can be visually recognized through the windows. An operation panel 110 is attached to the front surface of the driver chamber cover 131. As illustrated in FIGS. 3 and 4, the front surface of the casing 11 (front opening portions of the machining chamber 120, the driver chamber 130, the changer chamber 170, and the tool replacement chamber 180 herein) tilts with respect to the bottom surface. The front surface of the casing 11 tilts rearward.

As illustrated in FIGS. 3 and 4, a cutter chamber 150 housing a cutter 50 and a main shaft mover 60 that moves the cutter 50 (where the cutter 50 includes a main shaft 51 including a rotary spindle unit 52 as described later) is located above the machining chamber 120 and the driver chamber 130 and rearward of the changer chamber 170 and the tool replacement chamber 180. The cutter chamber 150 occupies substantially the entire width of the casing 11 in the left-right direction.

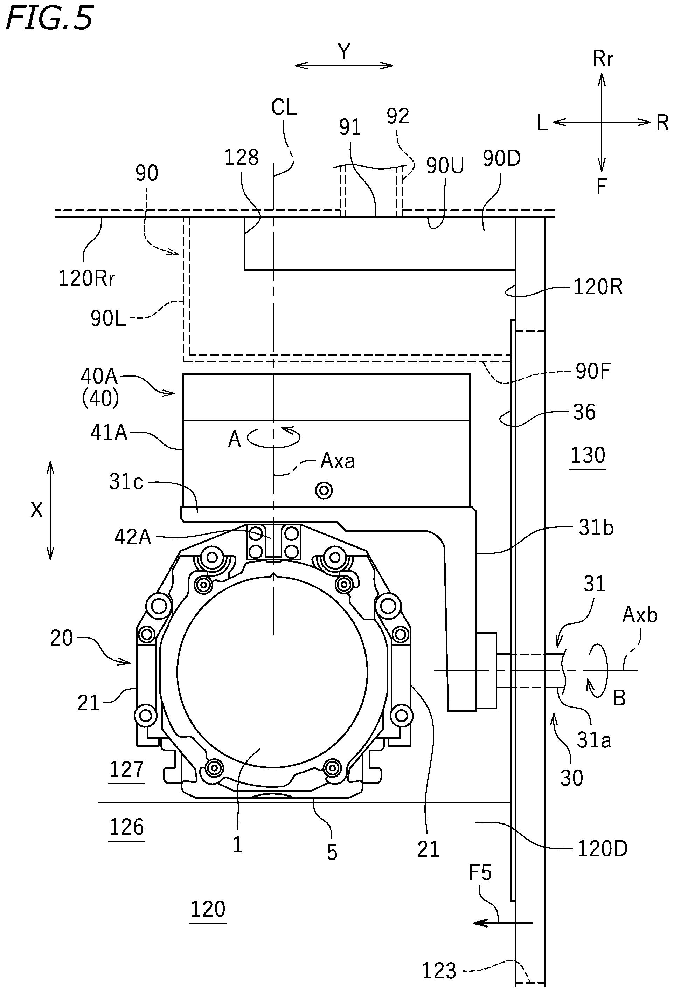

The workpiece holder 20 is an example of a holder that holds the cut object 1. The workpiece holder 20 holds the cut object 1 through the adaptor 5. The workpiece holder 20 may directly hold the cut object 1 without intervention of other members. FIG. 5 is a plan view of the workpiece holder 20. As illustrated in FIG. 5, the workpiece holder 20 includes a pair of left and right pair of arms 21. The adaptor 5 is inserted between the pair of arms 21 to be thereby held by the workpiece holder 20. Operation of the cutting machine 10 in inserting the adaptor 5 between the pair of arms 21 will be described later.

The holder mover 30 supports and moves the workpiece holder 20. In this embodiment, the holder mover 30 moves the workpiece holder 20 forward and rearward. More specifically, as illustrated in FIG. 4, the holder mover 30 moves the workpiece holder 20 obliquely forward and backward such that the workpiece holder 20 descends rearward. When the workpiece holder 20 is moved forward by the holder mover 30, the workpiece holder 20 also moves upward. When the workpiece holder 20 is moved rearward by the holder mover 30, the workpiece holder 20 also moves downward. As illustrated in FIG. 4, the direction in which the workpiece holder 20 is moved by the holder mover 30 will be hereinafter also referred to as an X-axis direction. In the following description, the front in the X-axis direction may also be simply referred to as "front," and the rear in the X-axis direction may also be simply referred to as "rear" unless otherwise specified.

As illustrated in FIG. 5, the holder mover 30 includes a support arm 31 extending in the left-right direction and supporting the workpiece holder 20. As illustrated in FIG. 4, the holder mover 30 includes an X-axis direction mobile object 32 connected to the support arm 31, a pair of X-axis guide rails 33, an X-axis direction driving motor 34, and a ball screw 35. The holder mover 30 moves the support arm 31 in the X-axis direction to thereby move the workpiece holder 20 in the X-axis direction. The holder mover 30 is at least partially housed in the driver chamber 130. In this embodiment, the X-axis direction mobile object 32, the pair of X-axis guide rails 33, the X-axis direction driving motor 34, the ball screw 35, and a part of the support arm 31 of the holder mover 30 are housed in the driver chamber 130.

As illustrated in FIG. 4, the pair of X-axis guide rails 33 extends in the X-axis direction. The X-axis direction mobile object 32 is slidably engaged with the pair of X-axis guide rails 33. The X-axis direction mobile object 32 is movable in the X-axis direction along the X-axis guide rails 33. The ball screw 35 extends in the X-axis direction. The ball screw 35 meshes with a nut located in the X-axis direction mobile object 32. The X-axis direction driving motor 34 rotates the ball screw 35 about the axis. When the X-axis direction driving motor 34 is driven to rotate the ball screw 35, the X-axis direction mobile object 32 moves in the X-axis direction along the X-axis guide rails 33. The X-axis direction driving motor 34 is an example of an actuator that moves the support arm 31 and the workpiece holder 20 in the X-axis direction by moving the X-axis direction mobile object 32 in the X-axis direction. The holder mover 30 is not limited to a device having a ball screw mechanism, and may include a timing belt and/or a wire, for example.

The holder mover 30 is configured to move the workpiece holder 20 within a predetermined range in the X-axis direction in cutting the cut object 1 held by the workpiece holder 20 with the cutter 50. This predetermined range in the X-axis direction will be hereinafter also referred to as a "moving range in cutting." FIG. 3 illustrates a state where the workpiece holder 20 is located within the moving range in cutting.

As illustrated in FIG. 5, the support arm 31 includes a rotary shaft 31a that rotates about an axis Axb extending in the left-right direction, a first arm 31b that is connected to the rotary shaft 31a orthogonally to the axis Axb and rotates together with the rotary shaft 31a in the front-rear direction, and a second arm 31c connected to the first arm 31b in parallel with the axis Axb (orthogonally to the first arm 31b). As illustrated in FIG. 4, a B-axis rotation motor 41B that rotates the rotary shaft 31a about the axis Axb is located to the X-axis direction mobile object 32. The support arm 31 and the B-axis rotation motor 41B constitute a part of a rotator 40 that changes a posture of the workpiece holder 20 by rotating the workpiece holder 20. When the B-axis rotation motor 41B is driven to rotate and the rotary shaft 31a, the workpiece holder 20 rotates in the front-rear direction. The direction in which the axis Axb extends will be hereinafter also referred to as a B-axis direction, and rotation about the axis Axb will be also referred to as rotation about a B axis. A device in the rotator 40 that rotates the workpiece holder 20 about the B axis will be also referred to as a B-axis rotator 40B.

The rotator 40 also includes an A-axis rotator 40A that rotates the workpiece holder 20 in the left-right direction. As illustrated in FIG. 5, the A-axis rotator 40A includes an A-axis rotation motor 41A and a rotation shaft 42A. The A-axis rotation motor 41A is fixed to the second arm 31c. The rotation shaft 42A is connected to the A-axis rotation motor 41A, and extends along an axis Axa in the front-rear direction. When the A-axis rotation motor 41A is driven, the rotation shaft 42A rotates about the axis Axa. The direction in which the axis Axa extends will be hereinafter also referred to as an A-axis direction, and rotation about the axis Axa will be also referred to as rotation about an A axis.

The machining chamber 120 is partitioned by a plurality of walls, and houses the workpiece holder 20. As illustrated in FIG. 3, the plurality of walls include a bottom wall 120D, a left wall 120L (see FIG. 1), a right wall 120R, a rear wall 120Rr, a front wall 120F, and a top wall 120U. The plurality of walls 120D, 120L, 120R, 120Rr, 120F, and 120U are made of metal plates in this embodiment. The bottom wall 120D is located below the workpiece holder 20 and defines the bottom surface of the machining chamber 120. The bottom wall 120D is substantially horizontal while the cutting machine 10 is placed on a horizontal plane. The top wall 120U is located above the workpiece holder 20 and defines the top surface of the machining chamber 120. Each of the left wall 120L, the right wall 120R, the rear wall 120Rr, and the front wall 120F stand to connect the top wall 120U and the bottom wall 120D to each other. The left wall 120L is connected to the left end of the bottom wall 120D and extends upward. The left wall 120L stands at the left of the workpiece holder 20. The right wall 120R is connected to the right end of the bottom wall 120D and extends upward. The right wall 120R is located at the right of the workpiece holder 20. The rear wall 120Rr is connected to the rear end of the bottom wall 120D and extends upward. The left end and the right end of the rear wall 120Rr are connected to the rear end of the left wall 120L and the rear end of the right wall 120R, respectively. The rear wall 120Rr stands rearward of the workpiece holder 20. The front wall 120F is connected to the front end of the bottom wall 120D and extends obliquely upward. The front wall 120F stands forward of the workpiece holder 20. The front wall 120F extends to tilt rearward. The direction in which the front wall 120F extends is orthogonal to the X-axis direction. The left end and the right end of the front wall 120F are connected to the front end of the left wall 120L and the front end of the right wall 120R, respectively. The top wall 120U extends in a direction orthogonal to the front wall 120F, that is, the direction parallel with the X-axis direction. The top wall 120U tilts downward toward the rear. The top wall 120U is not parallel to the bottom wall 120D. The front end, the left end, the right end, and the rear end of the top wall 120U are connected to the upper end of the front wall 120F, the upper end of the left wall 120L, the upper end of the right wall 120R, and the upper end of the rear wall 120Rr.

The front wall 120F of the machining chamber 120 has the front opening portion 121. As described above, the machining chamber door 122 is attached to the front opening portion 121 to be freely opened and closed. The front opening portion 121 extends upward from a position above the lower end of the front wall 120F. A portion of the front wall 120F near the lower end thereof is a corner portion that is not open to the outside.

The right wall 120R separates the machining chamber 120 and the driver chamber 130 from each other. The right wall 120R of the machining chamber 120 also serves as the left wall of the driver chamber 130. As illustrated in FIG. 3, the right wall 120R has a slit 123 extending in the X-axis direction and allowing the support arm 31 of the holder mover 30 to pass therethrough. The slit 123 is an opening in which the support arm 31 is inserted. A dustproof plate 36 for preventing cut chips generated in the machining chamber 120 from entering the driver chamber 130 is fixed to the support arm 31. The dustproof plate 36 covers at least a portion of the slit 123 and moves in the X-axis direction together with the support arm 31. The dustproof plate 36 is fixed to a portion of the support arm 31 located within the machining chamber 120 and is located in the machining chamber 120. The dustproof plate 36 herein covers different portions of the slit 123 depending on the position of the support arm 31 in the X-axis direction.

As illustrated in FIG. 3, the dustproof plate 36 covers a rear end portion of the slit 123 while the workpiece holder 20 is located within the moving range in cutting. At this time, a front end portion of the slit 123 is not covered with the dustproof plate 36 and is open. The dustproof plate 36 is located rearward of the front end portion of the slit 123 while the workpiece holder 20 is located within the moving range in cutting. The dustproof plate 36 opens a larger portion of the slit 123 at the front side as the support arm 31 moves rearward. This is because cut chips tend to gather rearward of the workpiece holder 20 because of a flow of wind in the machining chamber 120, and a small amount of cut chips is present forward of the workpiece holder 20, which will be described later. Accordingly, the length of the dustproof plate 36 is shortened, and forward elongation of the machining chamber 120 is suppressed. A front portion of the slit 123 is partially open, irrespective of the position of the workpiece holder 20. Since the front portion of the slit 123 is partially open, a flow of wind occurs from the driver chamber 130 toward the machining chamber 120. This suppresses entry of cut chips or the like in the machining chamber 120 into the driver chamber 130.

As illustrated in FIG. 3, the top wall 120U separates the machining chamber 120 and the changer chamber 170 from each other, and also separates the machining chamber 120 and the cutter chamber 150 from each other. The top wall 120U includes a forward opening 124 allowing the machining chamber 120 and the changer chamber 170 to communicate with each other, and a rearward opening 125 allowing the machining chamber 120 and the cutter chamber 150 to communicate with each other. A forward portion of the top wall 120U of the machining chamber 120 also serves as a bottom wall of the changer chamber 170. The forward opening 124 is located below the changer chamber 170. The forward opening 124 is an opening through which the cut object 1 conveyed by a conveyance device 72 of the workpiece changer 70 passes. The conveyance device 72 herein conveys an adaptor storage 71 accommodating the adaptor 5 to the machining chamber 120 through the forward opening 124, which will be described later.

A rearward portion of the top wall 120U of the machining chamber 120 also serves as a left portion of the bottom wall of the cutter chamber 150. The rearward opening 125 is formed below the cutter chamber 150. The rearward opening 125 is an opening through which at least a part of the cutter 50, a lower portion of the main shaft 51 herein, can pass. The rearward opening 125 is an opening through which the cutting tool 6 and the main shaft 51 pass when the main shaft 51 is moved by a Z-axis direction mover 60Z described later in the Z-axis direction (see FIG. 3). The rearward opening 125 extends to a position above the driver chamber 130 to cause the driver chamber 130 and the cutter chamber 150 to communicate with each other (see FIG. 7), which will be described later.

As illustrated in FIG. 3, the bottom wall 120D of the machining chamber 120 includes a substantially horizontal bottom portion 126 and a slope 127 connected to the rear end of the bottom portion 126 and extending rearward from the rear end. The slope 127 has an upward inclination toward the rear. The slope 127 and the bottom portion 126 are connected to each other to be bent. The slope 127 is connected to the rear wall 120Rr. A space is defined below the slope 127.

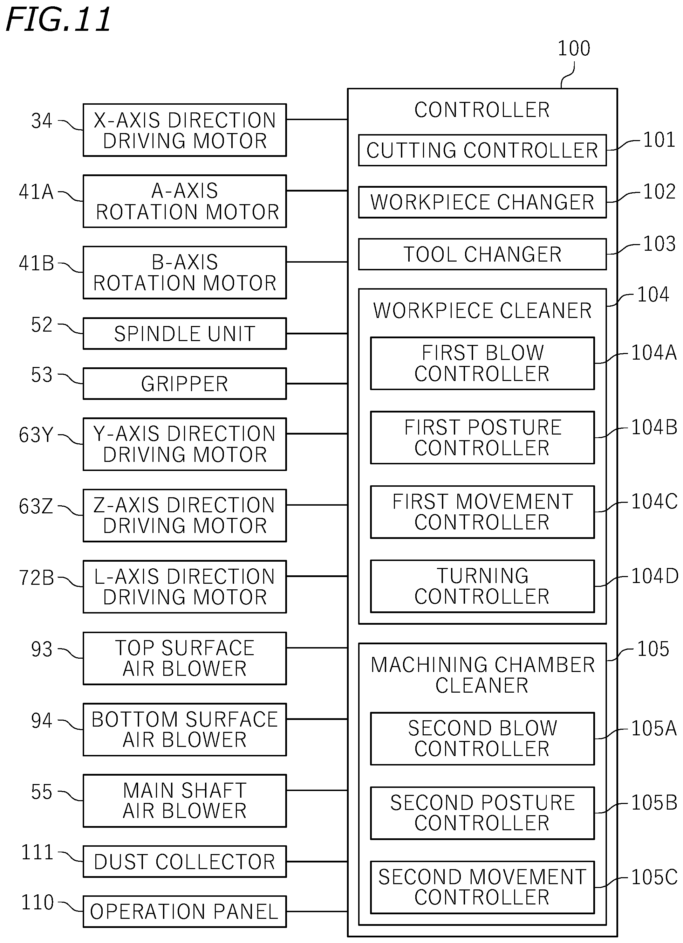

The bottom wall 120D has an exhaust port 128. A dust collector 111 (see FIG. 11) is connected to the exhaust port 128 through, for example, an exhaust duct 92 described later. Air and dust in the machining chamber 120 are discharged from the exhaust port 128. The exhaust port 128 is located in the slope 127. More specifically, the exhaust port 128 is open along a connection portion of the slope 127 connected to the rear wall 120Rr. The rear edge of the exhaust port 128 is defined by the rear wall 120Rr. The exhaust port 128 is located at a rearmost portion of the slope 127. The slope 127 has an upward inclination toward the exhaust port 128.

As illustrated in FIG. 5, the exhaust port 128 is open rearward of the workpiece holder 20. Accordingly, a flow of wind occurs from the front toward the rear across the workpiece holder 20. As illustrated in FIG. 5, in a plan view, at least a portion of the slope 127 overlaps at least a portion of the workpiece holder 20 (see also FIG. 3). Accordingly, fragments of the cut object 1 that have fallen off during cutting fall on the slope 127. Large fragments of the cut object 1 that have fallen onto the slope 127 are not sucked into the exhaust port 128 even by suction from the exhaust port 128 and slide down along the slope 127. Accordingly, large fragments of the cut object 1 are selected. In a case where the cut object 1 falls off from the adaptor 5 under a load of cutting, for example, the fallen cut object 1 is not sucked into the exhaust port 128 even by suction from the exhaust port 128, and slide down along the slope 127.

As illustrated in FIG. 5, the exhaust port 128 is offset rightward from the center line CL (that may or may not coincide with the A axis) of the machining chamber 120 in the left-right direction. In other words, the exhaust port 128 is offset toward the driver chamber 130 from the center line CL of the machining chamber 120 in the left-right direction. Accordingly, dust and others near the driver chamber 130 are mainly discharged. The exhaust port 128 is a slit that is open upward. The exhaust port 128 has a substantially rectangular shape that is longer in the left-right direction than in the front-rear direction.

As illustrated in FIG. 3, in this embodiment, a duct collecting chamber 90 is located below the exhaust port 128. The duct collecting chamber 90 is fixed to the lower surface of the slope 127. The duct collecting chamber 90 is a box-shaped member whose top is open. The duct collecting chamber 90 includes an upward opening 90U that is open upward and connected to the exhaust port 128. As illustrated in FIGS. 3 and 5, the duct collecting chamber 90 includes the upward opening 90U, a bottom wall 90D, a front wall 90F, and a left wall 90L. The rear wall and the right wall of the duct collecting chamber 90 are defined by the rear wall 120Rr and the right wall 120R, respectively, of the machining chamber 120. The duct collecting chamber 90 may include a rear wall and a right wall that are not shared by the machining chamber 120. The bottom wall 90D, the front wall 90F, the left wall 90L, the rear wall 120Rr of the machining chamber 120, and the right wall 120R of the machining chamber 120 define an internal space in the duct collecting chamber 90. As illustrated in FIG. 5, the internal space of the duct collecting chamber 90 is larger than the exhaust port 128 in a plan view.

The duct collecting chamber 90 includes the upward opening 90U and a duct connection hole 91. The duct connection hole 91 is an opening to which the exhaust duct 92 is connected. As illustrated in FIG. 3, the cutting machine 10 includes the exhaust duct 92 connected to the duct connection hole 91. The duct connection hole 91 is open at the rear wall (rear wall 120Rr of the machining chamber 120) of the duct collecting chamber 90. An opening direction of the upward opening 90U (exhaust port 128) intersects with an opening direction of the duct connection hole 91. The duct connection hole 91 may be open at another wall (e.g., right wall 120R) of the duct collecting chamber 90. The front end of the exhaust duct 92 is connected to the duct connection hole 91. The exhaust duct 92 communicates with the exhaust port 128 and the machining chamber 120 through the duct collecting chamber 90. The rear end of the exhaust duct 92 extends to the outside of the cutting machine 10. The dust collector 111 (see FIG. 11) is connected to the rear end of the exhaust duct 92. As illustrated in FIG. 5, the duct collecting chamber 90 and the exhaust duct 92 are also offset rightward from the center line CL of the machining chamber 120 in the left-right direction, that is, offset toward the driver chamber 130 from the center line CL of the machining chamber 120 in the left-right direction.

As illustrated in FIG. 3, the top wall 120U of the machining chamber 120 includes a top surface nozzle 93N of a top surface air blower 93. The top surface air blower 93 ejects air along the top wall 120U of the machining chamber 120 and sends the ejected air to the exhaust port 128 by way of the rear wall 120Rr, thereby cleaning the top wall 120U and the rear wall 120Rr of the machining chamber 120. The top surface air blower 93 includes unillustrated pipes connected to an external air compressor and other devices, an unillustrated valve for controlling an airflow, and the top surface nozzle 93N that ejects air along the top wall 120U of the machining chamber 120. As indicated by arrow F1 in FIG. 3, the top surface nozzle 93N ejects air along the top wall 120U and the rear wall 120Rr of the machining chamber 120 such that the air reaches the exhaust port 128. In this embodiment, the exhaust port 128 is open along a connection portion of the bottom wall 120D (more specifically the slope 127) connected to the rear wall 120Rr. Accordingly, air ejected from the top surface nozzle 93N is smoothly sent to the exhaust port 128.

Although not show in a plan view, the top surface nozzle 93N is aligned with the exhaust duct 92 with respect to the left-right direction. Accordingly, the top surface nozzle 93N is also offset rightward from the center line CL of the machining chamber 120 in the left-right direction. In other words, the top surface nozzle 93N is also offset toward the driver chamber 130 from the center line CL of the machining chamber 120 in the left-right direction. The top surface nozzle 93N can eject air toward the cutter 50 when projecting into the machining chamber 120. The top surface nozzle 93N herein ejects air such that the air passes below the rearward opening 125 of the top wall 120U. Accordingly, cleaning is performed on a lower portion of the main shaft 51 of the cutter 50 and the cutting tool 6 when moved into the machining chamber 120 through the rearward opening 125.

As illustrated in FIG. 3, the cutting machine 10 further includes a bottom surface air blower 94 including a bottom surface nozzle 94N. The bottom surface nozzle 94N ejects air such that the air reaches the exhaust port 128 along the bottom wall 120D of the machining chamber 120. The bottom surface air blower 94 sends ejected air to the exhaust port 128 along the bottom wall 120D of the machining chamber 120 to thereby clean the bottom wall 120D of the machining chamber 120. The bottom surface air blower 94 includes unillustrated pipes connected to an external air compressor and other devices, an unillustrated valve for controlling an airflow, and the bottom surface nozzle 94N that ejects air along the bottom wall 120D of the machining chamber 120.

The bottom surface nozzle 94N is located above the bottom wall 120D. Specifically, as illustrated in FIG. 3, the bottom surface nozzle 94N is fixed to an attachment plate 95 that obliquely bridges the bottom wall 120D and the front wall 120F of the of the machining chamber 120. As indicated by arrow in F2 in FIG. 3, the bottom surface nozzle 94N ejects air obliquely downward toward the bottom wall 120D and toward the exhaust port 128. In this embodiment, the bottom surface nozzle 94N ejects air toward the bottom wall 120D obliquely downward and rearward. Accordingly, air hitting the bottom wall 120D spreads in the left-right direction. As a result, without an increase in the width of the bottom surface nozzle 94N in the left-right direction, the bottom wall 120D can be cleaned in a wide range in the left-right direction. In this embodiment, the bottom surface nozzle 94N is located in a center portion of the machining chamber 120 in the left-right direction. The bottom surface nozzle 94N may be offset leftward or rightward from the center line CL of the machining chamber 120 in the left-right direction.

The workpiece changer 70 is configured to accommodate a plurality of cut objects 1 and to be used for changing cut objects 1 to be subjected to machining. As illustrated in FIG. 3, the workpiece changer 70 includes an adaptor storage 71 capable of accommodating a plurality of cut objects 1 (adaptors 5 equipped with the cut objects 1 herein, see FIG. 2), and the conveyance device 72 that conveys the adaptor storage 71 to the machining chamber 120. Except for the case of changing of the cut objects 1, for example, the adaptor storage 71 is housed in the changer chamber 170. As illustrated in FIG. 1, the adaptor storage 71 includes a plurality of shelf-like accommodation spaces 71a each for accommodating a corresponding one of the adaptors 5. The plurality of accommodation spaces 71a are arranged in the top-bottom direction. More specifically, the plurality of accommodation spaces 71a are arranged in an oblique top-bottom direction (hereinafter also referred to as an L-axis direction, see FIG. 3) orthogonal to the X-axis direction.

The conveyance device 72 includes a slide arm 72A extending in the L-axis direction, an L-axis direction driving motor 72B, and a ball screw 72C. The slide arm 72A is fixed to the adaptor storage 71 and is capable of extending and contracting in the L-axis direction. The ball screw 72C meshes with the adaptor storage 71. The L-axis direction driving motor 72B is connected to the ball screw 72C and rotates the ball screw 72C. When the L-axis direction driving motor 72B is driven to rotate the ball screw 72C, the slide arm 72A extends or contracts and the adaptor storage 71 moves in the L-axis direction.

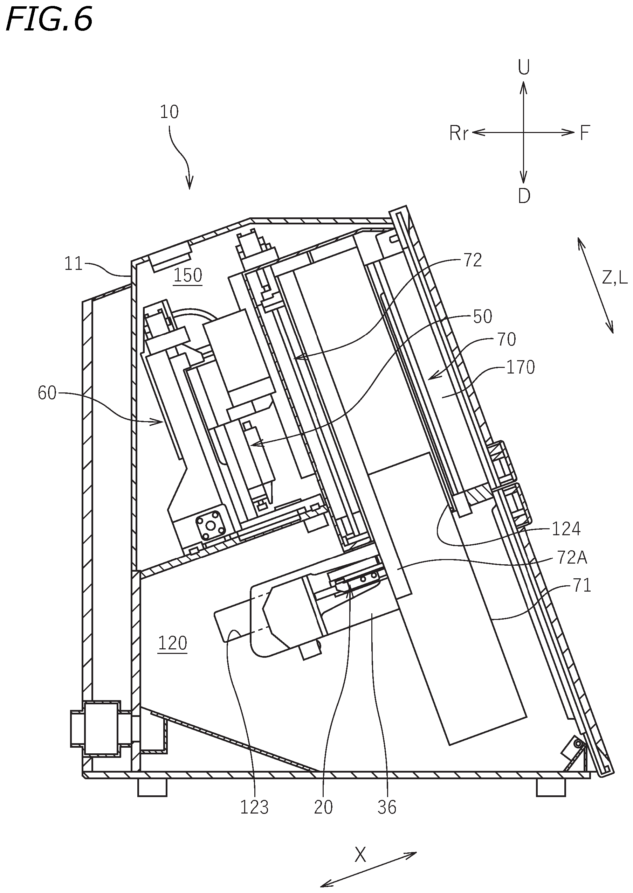

FIG. 6 is a longitudinal cross-sectional view illustrating the cutting machine 10 while the adaptors 5 (see FIG. 2) are being changed. As illustrated in FIG. 6, in changing the adaptors 5, the adaptor storage 71 descends into the machining chamber 120. The adaptor storage 71 moves into the machining chamber 120 through the forward opening 124 of the machining chamber 120. In changing adaptors 5, the holder mover 30 moves the workpiece holder 20 farther forward in the X-axis direction than the moving range in cutting. As illustrated in FIG. 6, at this time, a rear end portion of the slit 123 is not covered with the dustproof plate 36 and is open. While the workpiece holder 20 is located at a handover position at which the cut object 1 is handed over to/from the workpiece changer 70, the dustproof plate 36 is located forward of the rear end portion of the slit 123. Accordingly, the length of the dustproof plate 36 is shortened, and rearward elongation of the machining chamber 120 is suppressed. As illustrated in FIG. 6, the workpiece holder 20 moves forward in the X-axis direction and enters the accommodation space 71a (see FIG. 1) of the adaptor 5 so that the adaptor 5 is thereby held by the workpiece holder 20. In this embodiment, the conveyance device 72 conveys the adaptor storage 71 to the machining chamber 120 to thereby convey the plurality of cut objects 1 to the machining chamber 120, but the configuration of the conveyance device 72 is not limited to this embodiment. It is sufficient that the conveyance device 72 conveys at least one of the plurality of cut objects 1 accommodated in the adaptor storage 71 to the machining chamber 120. For example, the conveyance device 72 may hold and take out the cut objects 1 in the accommodation spaces 71a of the fixed adaptor storage 71 to hand over the cut objects 1 to/from the workpiece holder 20.

The cutter 50 and the mover (main shaft mover 60) of the cutter 50 are housed in the cutter chamber 150. The cutter 50 cuts the cut objects 1 held by the workpiece holder 20. As illustrated in FIG. 3, the cutter 50 and the main shaft mover 60 are located above the workpiece holder 20. The cutter 50 includes the main shaft 51 that grips and rotates the cutting tool 6. The main shaft 51 includes the spindle unit 52 and a gripper 53 located at a lower end portion of the spindle unit 52. The spindle unit 52 extends in a direction orthogonal to (parallel to the L-axis direction herein) the X-axis direction. This direction will be hereinafter also referred to as a Z-axis direction. The spindle unit 52 rotates the gripper 53 about an axis parallel to the Z-axis direction. The gripper 53 grips the cutting tool 6 such that the cutting tool 6 projects downward in the Z-axis direction. The spindle unit 52 is a unit incorporating a motor herein. The spindle unit 52 may be connected to, for example, an external motor by a belt or the like. The gripper 53 is, for example, an air-driven collet chuck. The type of the gripper 53 is not particularly limited.

The main shaft mover 60 moves the cutter 50 in the Z-axis direction and the left-right direction. The left-right direction is a direction orthogonal to the X-axis direction and the Z-axis direction. The left-right direction will be hereinafter also referred to as a Y-axis direction. The main shaft mover 60 moves the cutter 50 in the Y-axis direction and the Z-axis direction and the holder mover 30 moves the workpiece holder 20 in the X-axis direction so that the positional relationship between the cutting tool 6 and the cut object 1 changes in three dimensions. The Z-axis direction is a direction intersecting with (orthogonal to herein) the top wall 120U of the machining chamber 120, and the cutter 50 appears in the machining chamber 120 or retracts into the cutter chamber 150 through movement in the Z-axis direction. The main shaft mover 60 is capable of moving the cutter 50 to a position at which at least a portion of the cutter 50 is located above the workpiece holder 20 and below the top wall 120U.

The main shaft mover 60 includes a Y-axis direction mover 60Y and the Z-axis direction mover 60Z. The Y-axis direction mover 60Y moves the cutter 50 in the Y-axis direction. The Z-axis direction mover 60Z moves the cutter 50 in the Z-axis direction. FIG. 7 is a perspective view of the cutter chamber 150 and the driver chamber 130. FIG. 7 does not show some members so that the insides of the cutter chamber 150 and the driver chamber 130 can be seen. As illustrated in FIG. 7, the Y-axis direction mover 60Y includes a pair of Y-axis guide rails 61Y extending in the Y-axis direction, a Y-axis direction mobile object 62Y slidably engaged with the Y-axis guide rails 61Y, a Y-axis direction driving motor 63Y, and a ball screw 64Y. The pair of Y-axis guide rails 61Y is located on the bottom wall of the cutter chamber 150. The Y-axis guide rails 61Y extends to a position above the driver chamber 130. The Y-axis direction mobile object 62Y is movable in the Y-axis direction along the Y-axis guide rails 61Y. The Y-axis direction mobile object 62Y is movable to a position above the driver chamber 130 along the Y-axis guide rails 61Y. The Y-axis direction mobile object 62Y supports the Z-axis direction mover 60Z. The Z-axis direction mover 60Z supports the cutter 50 to be movable in the Z-axis direction.

As illustrated in FIG. 7, the ball screw 64Y extends in the Y-axis direction. The ball screw 64Y meshes with the Y-axis direction mobile object 62Y. The Y-axis direction driving motor 63Y rotates the ball screw 64Y. When the Y-axis direction driving motor 63Y is driven to rotate the ball screw 64Y, the Y-axis direction mobile object 62Y moves in the Y-axis direction along the Y-axis guide rails 61Y. Accordingly, the Z-axis direction mover 60Z and the cutter 50 move in the Y-axis direction.

As illustrated in FIG. 3, the Z-axis direction mover 60Z includes a pair of Z-axis guide shafts 61Z extending in the Z-axis direction, a Z-axis direction mobile object 62Z slidably engaged with the Z-axis guide shafts 61Z and supporting the cutter 50, a Z-axis direction driving motor 63Z, and an unillustrated ball screw. The Z-axis direction mover 60Z also moves the cutter 50 in the Z-axis direction with a mechanism similar to a mechanism in which the Y-axis direction mover 60Y moves the Z-axis direction mover 60Z.

Although not shown, bellows may be provided at the left and right of the Y-axis direction mobile object 62Y. Both ends of the right bellows are respectively coupled to the right end of the Y-axis direction mobile object 62Y and the right end of the rearward opening 125. Both ends of the left bellows are respectively coupled to the left end of the Y-axis direction mobile object 62Y and the left end of the rearward opening 125. The bellows suppress entry of dust and the like from the rearward opening 125 into the cutter chamber 150.

As illustrated in FIG. 3, the top wall 150U of the cutter chamber 150 has an intake port 152. The intake port 152 herein is constituted by a plurality of slits arranged in the left-right direction. The shape of the intake port 152 is not particularly limited. The intake port 152 is a port for taking outside air into the cutting machine 10 as air is emitted from the exhaust port 128. The intake port 152 communicates with the cutter chamber 150. The intake port 152 also communicates with the driver chamber 130 and the changer chamber 170 through the cutter chamber 150. The cutter chamber 150 and the driver chamber 130 communicate with each other through the rearward opening 125 located at the bottom wall of the cutter chamber 150 (top wall of the driver chamber 130). The cutter chamber 150 and the changer chamber 170 communicate with each other without any particular partition. The machining chamber 120 communicates with the intake port 152 through the cutter chamber 150 and the driver chamber 130. The driver chamber 130 and the machining chamber 120 communicate with each other through the slit 123 located in the right wall 120R of the machining chamber 120 (left wall of the driver chamber 130). The machining chamber 120 also communicates with the intake port 152 through the cutter chamber 150 and the changer chamber 170. The changer chamber 170 and the machining chamber 120 communicate with each other through the forward opening 124 located in the top wall 120U of the machining chamber 120 (bottom wall of the changer chamber 170).

Since the intake port 152 communicates with the cutter chamber 150, the cutter chamber 150 and the machining chamber 120 communicate with each other through the rearward opening 125, and the exhaust duct 92 communicates with the machining chamber 120, when the dust collector 111 is driven, a flow F3 of wind occurs from the intake port 152 toward the machining chamber 120 by way of the cutter chamber 150, as illustrated in FIG. 3. An internal pressure of the cutter chamber 150 is higher than an internal pressure of the machining chamber 120. Thus, cut chips and others generated in the machining chamber 120 are less likely to enter the cutter chamber 150. Similarly, since the intake port 152 communicates with the changer chamber 170 and the changer chamber 170 and the machining chamber 120 communicate with each other through the forward opening 124, when the dust collector 111 is driven, a flow F4 of wind occurs from the intake port 152 toward the machining chamber 120 by way of the changer chamber 170, as illustrated in FIG. 3. An internal pressure of the changer chamber 170 is higher than an internal pressure of the machining chamber 120. Accordingly, cut chips and others generated in the machining chamber 120 are less likely to enter the changer chamber 170. Further, since the intake port 152 communicates with the driver chamber 130, and the driver chamber 130 and the machining chamber 120 communicate with each other through the slit 123, when the dust collector 111 is driven, a flow F5 of wind occurs from the intake port 152 (see FIG. 3) toward the machining chamber 120 by way of the driver chamber 130, as illustrated in FIG. 5. An internal pressure of the driver chamber 130 is higher than an internal pressure of the machining chamber 120. Accordingly, cut chips and others generated in the machining chamber 120 are less likely to enter the driver chamber 130.

As illustrated in FIG. 7, in this embodiment, the tool container 80 is housed in the driver chamber 130. The tool container 80 is capable of accommodating a plurality of cutting tools 6. The plurality of cutting tools 6 are used selectively based on the material of the cut object 1 and the type of cutting, for example. As illustrated in FIG. 7, the tool container 80 is supported by the X-axis direction mobile object 32. Specifically, the tool container 80 is fixed to the upper surface of the X-axis direction mobile object 32. Tool containers have been conventionally supported by support arms of holder movers. Thus, in conventional cutters, the support arms are easily warped, and a heavy load cannot be applied to the cut object 1 during cutting of the cut object 1. Specifically, in consideration of a load by cutting, measures such as restriction of a cutting amount per a unit time have been taken. In this embodiment, the tool container 80 is supported by the X-axis direction mobile object 32 so that a load on the support arm 31 is thereby reduced.

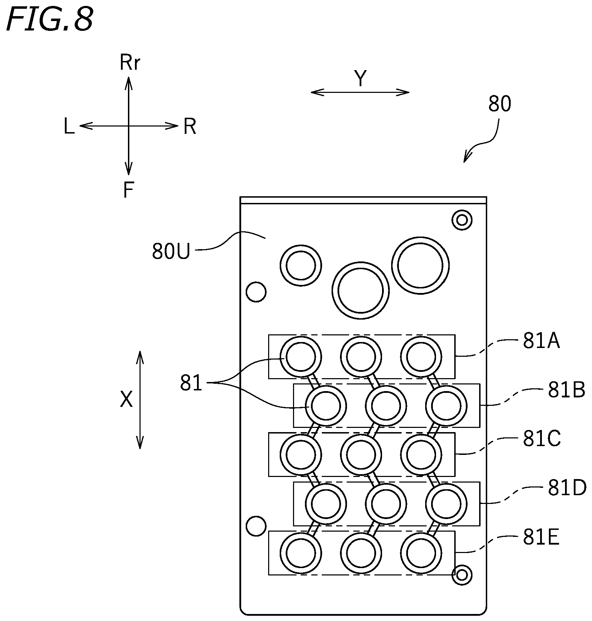

FIG. 8 is a plan view of the tool container 80. As illustrated in FIG. 8, the tool container 80 includes a plurality of accommodation holes 81 each capable of accommodating the cutting tool 6. The plurality of accommodation holes 81 are located on an upper surface 80U of the tool container 80 and recessed downward in the Z-axis direction. As illustrated in FIG. 8, the plurality of accommodation holes 81 are arranged in a staggered pattern. Specifically, the tool container 80 includes rows 81A through 81E composed of some of the plurality of accommodation holes 81 arranged in a predetermined arrangement direction (Y-axis direction herein), and two adjacent rows (e.g., row 81A and row 81B) of the plurality of rows 81A through 81E are offset from each other in the arrangement direction. The offset amount of the two adjacent rows in the arrangement direction is less than or equal to a half or less of the pitch of the accommodation holes 81 in the rows 81A through 81E. This staggered arrangement makes dense arrangement of the plurality of accommodation holes 81. Consequently, an accommodation efficiency of the cutting tools 6 relative to space is enhanced. The positions of the plurality of rows 81A through 81E in the arrangement direction are aligned in alternating order.

The cutter 50 grips each of the cutting tools 6 accommodated in the tool container 80, and causes the gripped cutting tool 6 to cut the cut object 1 held by the workpiece holder 20. To achieve this operation, the main shaft mover 60 moves the cutter 50 between the driver chamber 130 and the machining chamber 120. The holder mover 30 moves the tool container 80 to a position below the cutter chamber 150.

As illustrated in FIGS. 3 and 7, in this embodiment, the cutter 50 is located above the workpiece holder 20 and the tool container 80. The Y-axis direction mover 60Y of the main shaft mover 60 moves the cutter 50 in the Y-axis direction such that the cutter 50 moves between a position above the driver chamber 130 and a position above the machining chamber 120. The Z-axis direction mover 60Z of the main shaft mover 60 moves the cutter 50 in the top-bottom direction (Z-axis direction tilted relative to the vertical direction herein). The holder mover 30 is configured to move the tool container 80 to a tool grip position P1 (see FIG. 7) located below a movement path of the cutter 50 by the Y-axis direction mover 60Y. The tool grip position P1 is located below the rearward opening 125. In a state where the tool container 80 is moved to the tool grip position P1 and the cutter 50 is moved to a position above the tool grip position P1, the Z-axis direction mover 60Z is driven to lower the cutter 50 so that the cutter 50 can thereby grip the cutting tool 6 of the tool container 80.

The holder mover 30 is capable of moving the tool container 80 to a tool replacement position P2 located forward of the tool grip position P1. As illustrated in FIG. 7, the tool grip position P2 is located below a bottom wall 182 of the tool replacement chamber 180. The bottom wall 182 of the tool replacement chamber 180 separates the tool replacement chamber 180 and the driver chamber 130 from each other. As illustrated in FIG. 7, the bottom wall 182 of the tool replacement chamber 180 has an opening 183 that is located above the tool replacement position P2 and is open upward. The opening 183 is an opening through which the cutting tool 6 is inserted and extracted in/from the tool container 80 by a user. The opening 183 penetrates the bottom wall 182 in the Z-axis direction. When the holder mover 30 is driven to move the tool container 80 to the tool replacement position P2, the user can access the tool container 80 through the opening 183. The tool replacement chamber 180 including the opening 183 can prevent the user from unintentionally touching the holder mover 30 during replacement of the cutting tools 6, for example. This configuration also suppresses entry of external foreign substance into the driver chamber 130 during replacement of the cutting tools 6, for example.

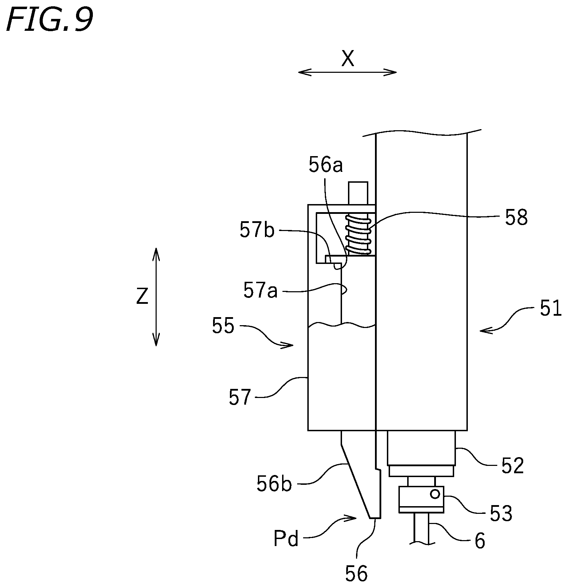

As illustrated in FIG. 3, the cutting machine 10 according to this embodiment further includes a main shaft air blower 55 that is located on the main shaft 51 and ejects air. The main shaft air blower 55 includes a main shaft nozzle 56 located at a side of the gripper 53 of the main shaft 51. FIG. 9 is a partially broken side view near a lower end of the main shaft 51. As illustrated in FIG. 9, the main shaft air blower 55 includes a main shaft nozzle 56 that ejects air and a nozzle support member 57 supporting the main shaft nozzle 56. The nozzle support member 57 is located above the gripper 53 in the Z-axis direction. The nozzle support member 57 herein is fixed to a cover covering the spindle unit 52. The nozzle support member 57 supports the main shaft nozzle 56 such that the main shaft nozzle 56 is movable in the Z-axis direction. Specifically, the nozzle support member 57 supports the main shaft nozzle 56 such that the main shaft nozzle 56 is movable between a lower end position Pd in the Z-axis direction (position illustrated in FIG. 9 and also referred to as a lower end position Pd) and another position located above the lower end position Pd in the Z-axis direction. The lower end position Pd of the main shaft nozzle 56 is located at a side of the gripper 53. At the lower end position Pd, the gripper 53 and the main shaft nozzle 56 are arranged in the X-axis direction.

As illustrated in FIG. 9, the nozzle support member 57 includes a guide hole 57a in which the main shaft nozzle 56 is inserted, and a stopper 57b that restricts movement of the main shaft nozzle 56 downward of the lower end position Pd. The main shaft air blower 55 includes a biasing member 58 that biases the main shaft nozzle 56 supported by the nozzle support member 57 and holds the main shaft nozzle 56 at the lower end position Pd. The biasing member 58 herein is a coil spring. The biasing member 58 is not limited to the coil spring, and may be, for example, an air cylinder. The main shaft nozzle 56 includes a contact portion 56a that contacts the stopper 57b at the lower end position Pd. The stopper 57b and the biasing member 58 hold the main shaft nozzle 56 at the lower end position Pd. When the main shaft nozzle 56 is pushed upward in the Z-axis direction, the main shaft nozzle 56 moves upward in the Z-axis direction along the guide hole 57a against a biasing force of the biasing member 58.

The main shaft nozzle 56 is located above the workpiece holder 20 and ejects air downward (downward in the vertical direction herein). The direction of air ejection by the main shaft air blower 55 is downward in the vertical direction. Accordingly, air is obliquely blown to the cutting tool 6 gripped by the gripper 53. The main shaft nozzle 56 may eject air in other directions. The main shaft nozzle 56 includes a cut surface 56b located at the side wall and obliquely intersecting with the Z-axis direction. The cut surface 56b includes a slope that gradually approaches the gripper 53 toward the bottom in the Z-axis direction The cut surface 56b herein extends from the lower end of the main shaft nozzle 56 obliquely upward.

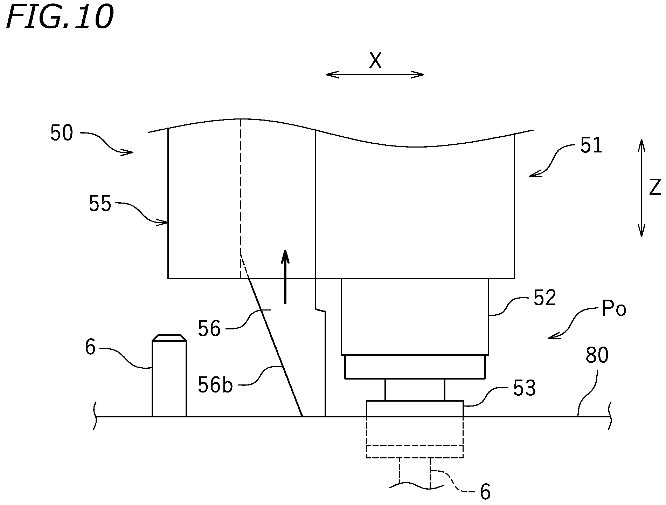

In returning the cutting tool 6 mounted to the main shaft 51 to the tool container 80 or attaching the cutting tool 6 of the tool container 80 to the main shaft 51, the Z-axis direction mover 60Z moves the gripper 53 to a predetermined position in the Z-axis direction (hereinafter also referred to as an operating position Po) at which the cutting tool 6 accommodated in the tool container 80 is gripped or released. FIG. 10 is a side view near a tip of the cutter 50 during changing of cutting tools 6. FIG. 10 illustrates a state where the gripper 53 is located at the operating position Po. As illustrated in FIG. 10, the main shaft nozzle 56 is in contact with the tool container 80 in the state where the gripper 53 is located at the operating position Po in the Z-axis direction. At this time, the main shaft nozzle 56 is pushed by the tool container 80 to be located above the lower end position Pd in the Z-axis direction against a biasing force of the biasing member 58.

While the main shaft nozzle 56 is not in contact with the tool container 80, the main shaft nozzle 56 is located at the lower end position Pd at a lower position in the Z-axis direction than a position when the main shaft nozzle 56 is in contact with the tool container 80. Accordingly, during machining and cleaning of the cut objects 1 or cleaning of the machining chamber 120 (where the main shaft air blower 55 ejects air into the machining chamber 120 and to the workpiece holder 20 and is also used for cleaning of the machining chamber 120, which will be described later), the main shaft nozzle 56 can be positioned near a front blade of the cutting tool 6, the cut object 1, or the bottom wall 120D of the machining chamber 120. On the other hand, if the main shaft nozzle 56 is at the lower end position Pd, in returning the cutting tool 6 mounted to the main shaft 51 to the tool container 80 or in mounting the cutting tool 6 of the tool container 80 to the main shaft 51, the long main shaft nozzle 56 interferes with the tool container 80 or the cutting tools 6. In view of this, in this embodiment, the main shaft air blower 55 moves upward (contracts) when the main shaft nozzle 56 is pushed upward in the Z-axis direction.

The cut surface 56b of the main shaft nozzle 56 is provided because the main shaft nozzle 56 moves upward when an object pushes the main shaft nozzle 56 from the side. When the object pushes the cut surface 56b from the side, the cut surface 56b converts a part of this pushing force to an upward force in the Z-axis direction, and the main shaft nozzle 56 moves upward.

The configuration in which the main shaft nozzle 56 moves upward and downward along the Z axis is also effective for the possibility that an object other than the tool container 80 hits the main shaft nozzle 56. With this configuration, when an object hits the main shaft nozzle 56, the main shaft nozzle 56 moves upward along the Z axis. Accordingly, the risk of damage of the main shaft nozzle 56 or the object hitting the main shaft nozzle 56 can be reduced.

A controller 100 is connected to the holder mover 30, the main shaft mover 60, the cutter 50, and other devices, and controls these devices. FIG. 11 is a block diagram of the cutting machine 10. As illustrated in FIG. 11, the controller 100 is connected to the X-axis direction driving motor 34 of the holder mover 30, the A-axis rotation motor 41A and the B-axis rotation motor 41B of the rotator 40, the spindle unit 52 and the gripper 53 of the cutter 50, the Y-axis direction driving motor 63Y and the Z-axis direction driving motor 63Z of the main shaft mover 60, the L-axis direction driving motor 72B of the workpiece changer 70, the top surface air blower 93, the bottom surface air blower 94, the main shaft air blower 55, the dust collector 111, and the operation panel 110, and controls these devices. The control of the dust collector 111 may not be performed by the controller 100, and may be performed by a controller incorporated in the dust collector 111 or an external device.

The configuration of the controller 100 is not particularly limited. The controller 100 is, for example, a microcomputer. A hardware configuration of the microcomputer is not particularly limited. The microcomputer may include, for example, an interface (I/F) that receives cutting data and other data from external equipment such as a host computer, a central processing unit (CPU) that executes an instruction of a control program, a read only memory (ROM) that stores programs to be executed by the CPU, a random access memory (RAM) that is used as a working area where programs are developed, and a storage that stores the programs, the data, and so forth, such as a memory.

As illustrated in FIG. 11, the controller 100 includes a cutting controller 101, a workpiece changer 102, a tool changer 103, a workpiece cleaner 104, and a machining chamber cleaner 105. The controller 100 may include other processing devices, but these devices are not illustrated and described herein.

The cutting controller 101 controls the X-axis direction driving motor 34 of the holder mover 30, the A-axis rotation motor 41A and the B-axis rotation motor 41B of the rotator 40, the spindle unit 52 of the cutter 50, and the Y-axis direction driving motor 63Y and the Z-axis direction driving motor 63Z of the main shaft mover 60, and cuts the cut object 1 into a specified shape. During cutting of the cut object 1, the main shaft air blower 55 is driven as appropriate, and cut chips adhering to the cut object 1, the adaptor 5, and the workpiece holder 20 are removed. During cutting of the cut object 1, the dust collector 111 is driven.

The workpiece changer 102 controls the L-axis direction driving motor 72B of the workpiece changer 70 and the X-axis direction driving motor 34 of the holder mover 30, and changes the cut objects 1 (adaptors 5 holding the cut objects 1). In this manner, the plurality of cut objects 1 are sequentially machined. The tool changer 103 controls the X-axis direction driving motor 34 of the holder mover 30, the Y-axis direction driving motor 63Y and the Z-axis direction driving motor 63Z of the main shaft mover 60, and the gripper 53 of the cutter 50, and changes the cutting tools 6 to be gripped by the gripper 53.

After cutting, the workpiece cleaner 104 cleans the cut object 1, the adaptor 5, and the workpiece holder 20. As illustrated in FIG. 10, the workpiece cleaner 104 includes a first blow controller 104A, a first posture controller 104B, a first movement controller 104C, and a turning controller 104D.

After cutting of the cut object 1 is finished, the first blow controller 104A controls the main shaft air blower 55 to eject air toward the workpiece holder 20. The first posture controller 104B controls the rotator 40 to control the posture of the workpiece holder 20 such that two opposed surfaces (the first surface 1A and the second surface 1B) of the cut object 1 intersect with the direction of air ejection by the main shaft air blower 55 at a predetermined angle, after cutting of the cut object 1 is finished and before the main shaft air blower 55 ejects air by control of the first blow controller 104A. In this embodiment, the predetermined angle is 90 degrees. The angle formed by the direction of air ejection from the main shaft air blower 55 and the two opposed surfaces 1A and 1B of the cut object 1 is not limited to 90 degrees. The first posture controller 104B also controls the rotator 40 to control the posture of the workpiece holder 20 such that the first surface 1A of the cut object 1 faces the main shaft nozzle 56, after cutting of the cut object 1 is finished and before the main shaft air blower 55 ejects air by control of the first blow controller 104A. In this manner, the first surface 1A of the cut object 1 is cleaned.

While the main shaft air blower 55 ejects air by control of the first blow controller 104A, the first movement controller 104C controls the holder mover 30 and the Y-axis direction mover 60Y to move the position of the main shaft nozzle 56 relative to the workpiece holder 20. Accordingly, the position of the workpiece holder 20 to which air is ejected moves. The holder mover 30 and the Y-axis direction mover 60Y function as movers that move the position of the main shaft nozzle 56 relative to the workpiece holder 20. In this embodiment, the first movement controller 104C moves to the position of the main shaft nozzle 56 relative to the workpiece holder 20 such that a movement path of the main shaft nozzle 56 relative to the workpiece holder 20 draws a scanning line.

The turning controller 104D controls the rotator 40 and changes the posture of the workpiece holder 20 such that the second surface 1B of the cut object 1 faces the main shaft nozzle 56 while the main shaft air blower 55 ejects air by control of the first blow controller 104A. In this manner, after cleaning of the first surface 1A of the cut object 1, the second surface 1B is cleaned. During workpiece cleaning, the dust collector 111 is driven.

The machining chamber cleaner 105 cleans the machining chamber 120 after cutting and workpiece cleaning. However, the machining chamber cleaner 105 is not prohibited from cleaning the machining chamber 120 before workpiece cleaning, as long as the cleaning of the machining chamber 120 is performed after completion of cutting. As illustrated in FIG. 11, the machining chamber cleaner 105 includes a second blow controller 105A, a second posture controller 105B, and a second movement controller 105C.

The second blow controller 105A controls the main shaft air blower 55 to eject air into the machining chamber 120, after completion of cutting of the cut object 1. The second posture controller 105B controls the rotator 40 to set the posture of the workpiece holder 20 at a predetermined posture, after cutting of the cut object 1 is finished (and further, after workpiece cleaning by control of the workpiece cleaner 104 herein) and before the main shaft air blower 55 ejects air by control of the second blow controller 105A. Control of the main shaft air blower 55 by the first blow controller 104A and control of the main shaft air blower 55 by control of the second blow controller 105A may be consecutively performed. That is, during workpiece cleaning and machining chamber cleaning, air ejection may continue.

In this embodiment, the predetermined posture of the workpiece holder 20 is a posture in which the two opposed two opposed surfaces 1A and 1B of the cut object 1 held by the workpiece holder 20 tilt with respect to the bottom wall 120D of the machining chamber 120. More specifically, the predetermined posture of the workpiece holder 20 is a posture in which the two opposed surfaces 1A and 1B of the cut object 1 held by the workpiece holder 20 tilt downward toward the front. Accordingly, air ejected from the main shaft air blower 55 flows along the cut object 1 held by the workpiece holder 20 and the adaptor 5 and flows directedly obliquely downward toward the front. In cleaning of the machining chamber 120 according to this embodiment, the direction of air flowing in the machining chamber 120 is controlled by controlling the posture of the workpiece holder 20.

The second movement controller 105C controls the Y-axis direction mover 60Y while the main shaft air blower 55 ejects air by control of the second blow controller 105A, and moves the main shaft nozzle 56 leftward or rightward. Accordingly, a flow of wind obliquely downward toward the front generated by controlling the posture of the workpiece holder 20 moves leftward or rightward. Consequently, cleaning of the machining chamber 120 progresses leftward or rightward.

In machining chamber cleaning, the second blow controller 105A also controls the top surface air blower 93 and the bottom surface air blower 94 to eject air. Specifically, the second blow controller 105A controls the top surface air blower 93 and the bottom surface air blower 94 to eject air from the top surface nozzle 93N and the bottom surface nozzle 94N, and then, controls the main shaft air blower 55 to eject air into the machining chamber 120. Further, after the second blow controller 105A controls the main shaft air blower 55 to eject air into the machining chamber 120, the second blow controller 105A controls the top surface air blower 93 and the bottom surface air blower 94 to eject air. The second posture controller 105B may change the posture of the workpiece holder 20 once or multiple times while machining chamber cleaning is being cleaned to thereby change the direction of wind once or multiple times. During machining chamber cleaning, the dust collector 111 is also driven.

### [Entire Process]

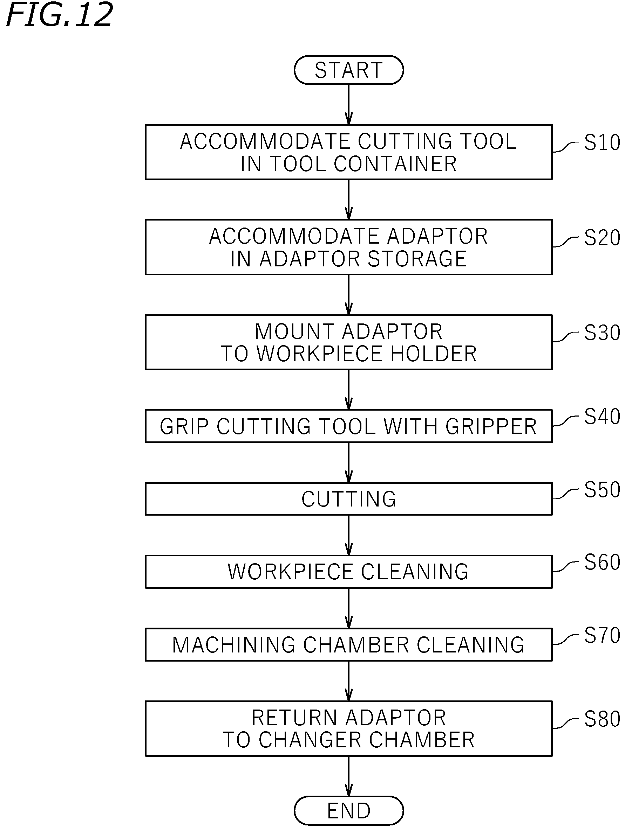

The following description is directed to a process including setting of the cut object 1 and the cutting tool 6 to the cutting machine 10, machining of the cut object 1, and cleaning of the cut object 1 and the machining chamber 120. FIG. 12 is a flowchart of the entire process. As shown in FIG. 12, in step S10 of a process of cutting of the cut object 1, the cutting tools 6 are accommodated in the tool container 80. Step S10 is performed by a user. The user opens the tool replacement chamber door 181 and accommodates the cutting tools 6 in the accommodation holes 81 of the tool container 80. In step S20, the adaptors 5 to which the cut objects 1 are mounted (where description of the step of mounting the cut objects 1 to the adaptors 5 is omitted) are accommodated in the accommodation spaces 71a of the adaptor storage 71. Step S20 is also performed by the user. The user opens the changer chamber door 171 and accommodates the cutting tools 6 in the adaptor storage 71. Steps S10 and S20 may be performed in the reversed order.

In subsequent step S30, one of the adaptors 5 accommodated in the workpiece changer 70 is mounted to the workpiece holder 20. In step S30, the conveyance device 72 conveys the adaptor storage 71 into the machining chamber 120. Thereafter, the holder mover 30 moves the workpiece holder 20 forward in the X-axis direction, and the adaptor 5 is mounted to the workpiece holder 20. When the adaptor 5 is mounted to the workpiece holder 20, the workpiece holder 20 moves rearward in the X-axis direction. Accordingly, the cut object 1 mounted to the workpiece holder 20 is moved below the cutter chamber 150. Then, the adaptor storage 71 is returned to the changer chamber 170.

In step S40, one of the cutting tools 6 accommodated in the tool container 80 is gripped by the gripper 53 of the cutter 50. In step S40, the holder mover 30 moves the tool container 80 to the tool grip position P1 (see FIG. 7). Further, the Y-axis direction mover 60Y moves the cutter 50 to a position above the tool grip position P1. In this state, the Z-axis direction mover 60Z is driven so that the cutter 50 thereby descends to the operating position Po set as a position at which the gripper 53 grips or releases the cutting tool 6. Accordingly, the cutter 50 can grip the cutting tool 6 of the tool container 80. At this time, as illustrated in FIG. 10, the main shaft nozzle 56 is brought into contact with the tool container 80 and pushed upward in the Z-axis direction by the tool container 80. Accordingly, the main shaft nozzle 56 moves upward in the Z-axis direction against a biasing force of the biasing member 58.

When gripping of the cutting tool 6 is finished, the Z-axis direction mover 60Z moves the main shaft nozzle 56 to a position above the rearward opening 125. Accordingly, the cutter 50 becomes movable in the Y-axis direction. The main shaft nozzle 56 returns to the lower end position Pd by biasing of the biasing member 58. Thereafter, the cutter 50 is moved to a position above the machining chamber 120. Steps S30 and S40 may be performed in the reversed order.

In step S50, the cut object 1 is subjected to cutting, and a machining object is carved out. In step S50, the holder mover 30, the Y-axis direction mover 60Y, and the Z-axis direction mover 60Z are driven to change a relative position between the cutting tool 6 and the cut object 1, and the rotator 40 is driven to change the posture of the cut object 1. The cutting tool 6 is changed to a specified cutting tool as appropriate in a manner similar to step S40. In this manner, a machining object is completed. In step S50, air is ejected from the main shaft air blower 55 to prevent cut chips generated by cutting from adhering to the cut object 1, the adaptor 5, and the cutting tool 6. During step S50, the dust collector 111 is driven.

In step S60, workpiece cleaning is performed. In step S70, machining chamber cleaning is performed. Steps S60 and S70 will be described in detail later. In step S80, the cut object 1 for which cutting has been finished is returned to the changer chamber 170 together with the adaptor 5. In step S80, operations of each part are performed in the reverse order of step S30. Through steps S10 through S80, a machining object is obtained from the cut object 1, and cut chips are removed from the machining object, the adaptor 5, and the machining chamber 120.

### [Workpiece Cleaning Process]

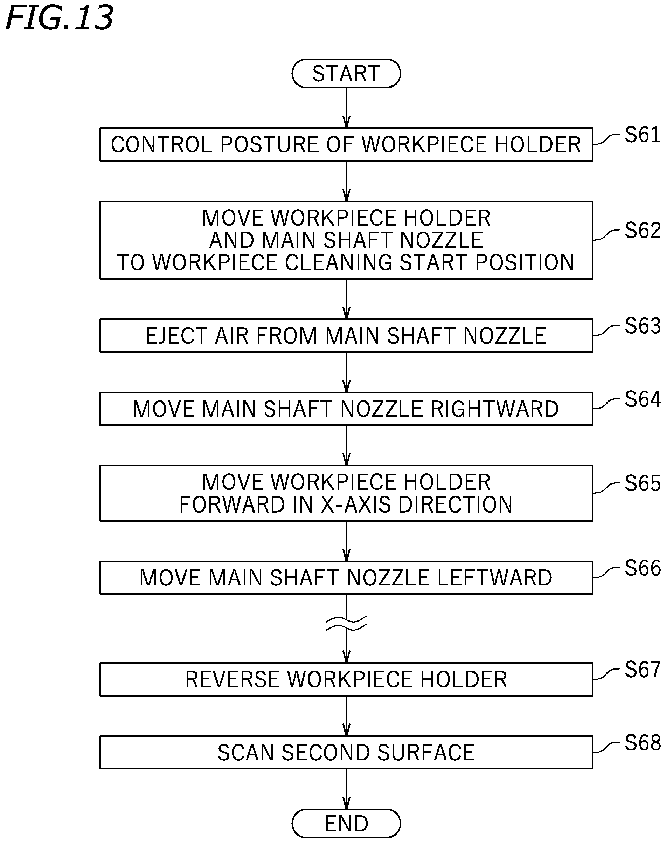

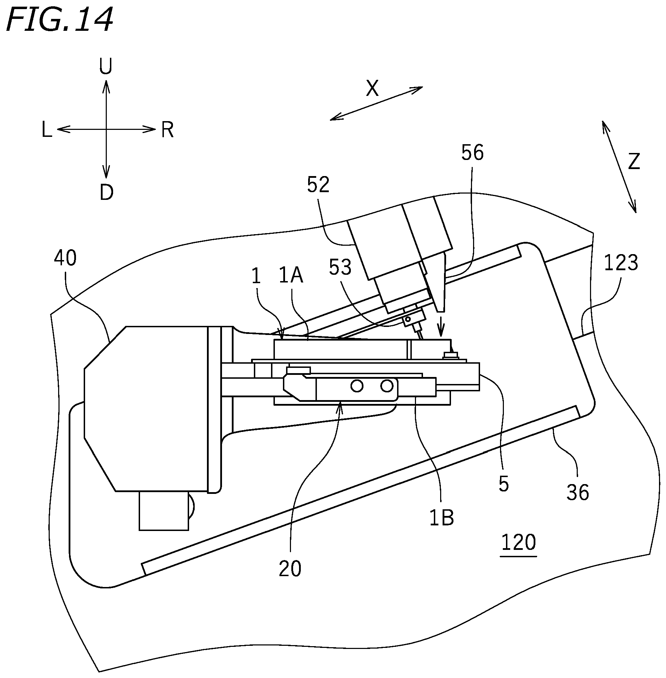

Workpiece cleaning in step S60 will now be described in detail. FIG. 13 is a flowchart of workpiece cleaning. As shown in FIG. 13, in step S61 of workpiece cleaning, the rotator 40 is driven to change the posture of the workpiece holder 20 such that the first surface 1A and the second surface 1B of the cut object 1 are orthogonal to the air ejection direction of the main shaft nozzle 56. FIG. 14 is a side view of the workpiece holder 20 during workpiece cleaning. As illustrated in FIG. 14, the posture of the workpiece holder 20 is herein changed such that the first surface 1A and the second surface 1B of the cut object 1 are substantially horizontal.

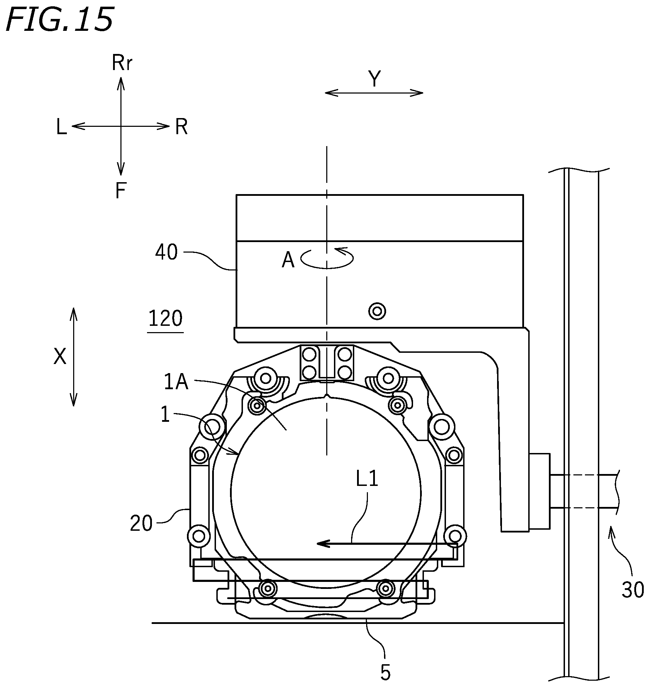

As shown in FIG. 13, in next step S62, the workpiece holder 20 and the main shaft nozzle 56 are moved to the start position of workpiece cleaning. Steps S61 and S62 may be performed in the reverse order. FIG. 15 is a plan view of the workpiece holder 20 showing a procedure of workpiece cleaning. Arrow L1 in FIG. 15 indicates a movement path of the main shaft nozzle 56 relative to the workpiece holder 20. The position in workpiece cleaning will be hereinafter represented as a position of the adaptor 5 overlapping the main shaft nozzle 56 in a plan view. As illustrated in FIG. 15, the start position of workpiece cleaning is the left front corner of the adaptor 5. The start position of workpiece cleaning may be the right front, left rear, or right rear corner of the adaptor 5. In step S63, air is ejected from the main shaft nozzle 56.

In step S64, the main shaft nozzle 56 is moved to the right front corner of the adaptor 5. Accordingly, cut chips in an area from the left front corner to the right front corner of the adaptor 5 are removed. In step S65, the workpiece holder 20 is moved forward in the X-axis direction. Accordingly, the position hit by air ejected from the main shaft nozzle 56 moves to a rear side of the adaptor 5. The amount of movement of the workpiece holder 20 in step S65 is preferably less than or equal to the length of the main shaft nozzle 56 in the X-axis direction. In step S66, the main shaft nozzle 56 is moved leftward until the main shaft nozzle 56 reaches the left edge of the adaptor 5. Accordingly, cut chips in an area from the right edge to the left edge of the adaptor 5 are removed along the movement path L1 of the main shaft nozzle 56. Although not shown, the movement described above is repeated until the entire region of the adaptor 5 is scanned. In the manner described above, in workpiece cleaning, the position of the main shaft nozzle 56 relative to the workpiece holder 20 is moved such that the movement path L1 of the main shaft nozzle 56 relative to the workpiece holder 20 draws a scanning line. Accordingly, the entire region of the first surface 1A of the adaptor 5 is cleaned.

In subsequent step S67, the rotator 40 is driven to rotate the workpiece holder 20 about the A axis by 180 degrees. Accordingly, the adaptor 5 is reversed, and the second surface 1B of the cut object 1 faces the main shaft nozzle 56. In step S68, reverse operation of steps S64 through S66 is performed, and the main shaft nozzle 56 returns to the start position of workpiece cleaning while drawing a scanning line. Accordingly, the entire region of the second surface 1B of the adaptor 5 is cleaned. Then, workpiece cleaning is finished.

### [Machining Chamber Cleaning Process]

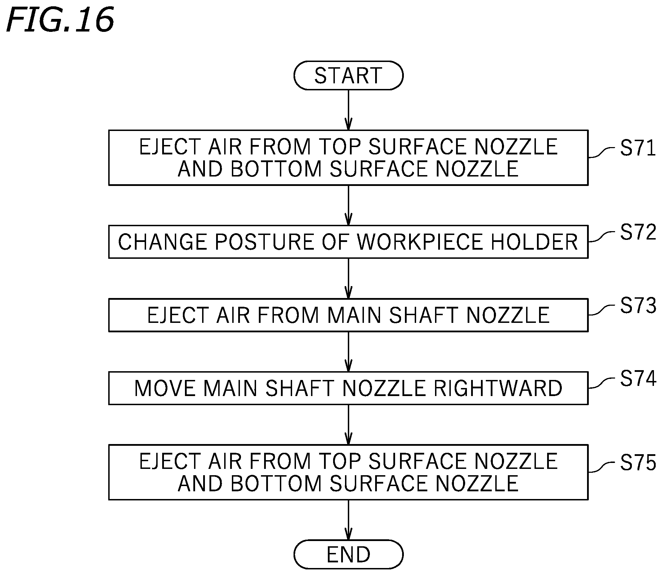

Next, the machining chamber cleaning in step S70 will be described in detail. FIG. 16 is a flowchart of processing chamber cleaning. As shown in FIG. 16, in step S71 of machining chamber cleaning, the top surface air blower 93 and the bottom surface air blower 94 are driven to eject air from the top surface nozzle 93N and the bottom surface nozzle 94N. Accordingly, cut chips adhering to the top wall 120U and the rear wall 120Rr are blown off, and cut chips on the bottom wall 120D are collected toward the exhaust port 128. Most of the cut chips blown off from the top wall 120U and the rear wall 120Rr and the cut chips collected on the bottom wall 120D are sucked into the exhaust port 128 formed along a connection portion of the bottom wall 120D and the rear wall 120Rr. At the end of step S71, ejection of air from the top surface nozzle 93N and the bottom surface nozzle 94N is stopped.

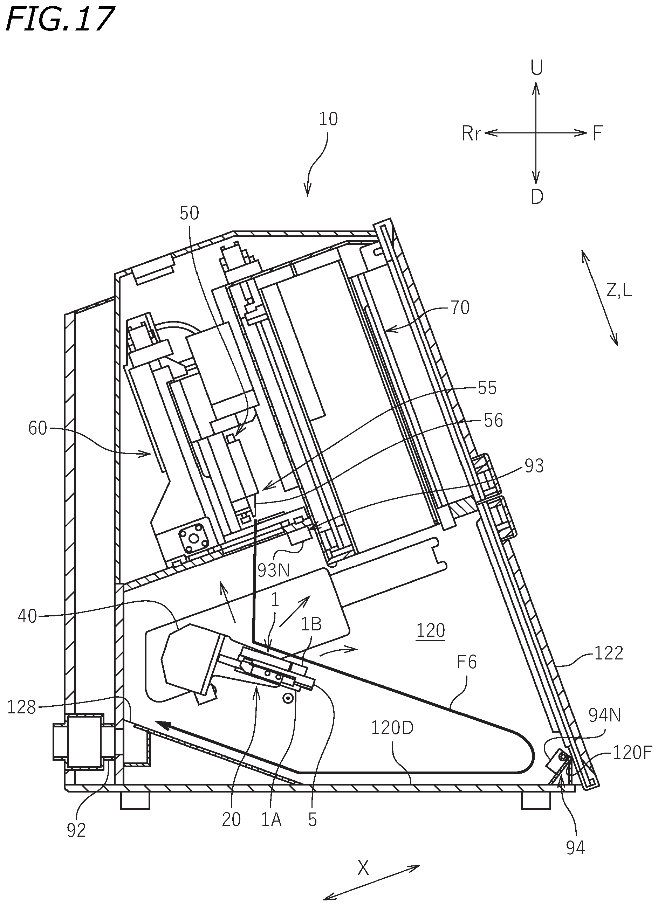

In subsequent step S72, the rotator 40 is driven to change the posture of the workpiece holder 20 such that the two opposed surfaces 1A and 1B of the cut object 1 tilt downward toward the front. Step S72 may be performed before step S71. FIG. 17 is a cross-sectional view of the cutting machine 10 during machining chamber cleaning. As illustrated in FIG. 17, through step S72, the adaptor 5 is in a predetermined posture in which the front end is located below the rear end. Accordingly, the two opposed surfaces 1A and 1B of the cut object 1 tilt relative to the bottom wall 120D of the machining chamber 120. In step S73, air is ejected from the main shaft nozzle 56 toward the workpiece holder 20. When air is ejected toward the workpiece holder 20, as indicated by arrow F6 in FIG. 17, the direction of air changes along the workpiece holder 20, the adaptor 5 held by the workpiece holder 20, and the cut object 1 held by the adaptor 5. The workpiece holder 20 herein is in the posture in which the two opposed surfaces 1A and 1B of the cut object 1 tilt downward toward the front. Accordingly, as indicated by a flow F6 of wind in FIG. 17, the air ejected from the main shaft nozzle 56 downward is mainly directed obliquely downward toward the front. Additionally, depending on the shapes of the workpiece holder 20, the adaptor 5, and the cut object 1, the air changes its direction to scatter. The air whose direction has changed to the obliquely downward direction toward the front changes its direction again toward the rear along the bottom wall 120D by the front wall 120F of the machining chamber 120 and the machining chamber door 122. With the flow F6 of wind directed toward the rear, most part of cut chips and others collected near the exhaust port 128 but not sucked into the exhaust port 128 in step S71 are pushed into the exhaust port 128.

In step S74, the Y-axis direction mover 60Y is driven to move the main shaft nozzle 56 rightward. At this time, the main shaft nozzle 56 may move leftward. With this movement of the main shaft nozzle 56, cut chips and others are pushed into the exhaust port 128 in a wide range of the machining chamber 120 in the left-right direction. At the end of step S74, ejection of air from the main shaft nozzle 56 is stopped.

The posture of the workpiece holder 20 in machining chamber cleaning is not limited to the posture described above. In machining chamber cleaning, the workpiece holder 20 may be in another posture in which the two opposed surfaces 1A and 1B of the cut object 1 tilt relative to the bottom wall 120D of the machining chamber 120. In machining chamber cleaning, the workpiece holder 20 may be in a posture in which the left or right end of the adaptor 5 is located below the right or left end, for example. In this posture, air hitting the adaptor 5 and the cut object 1 changes its direction and is directed to the left wall 120L or the right wall 120R of the machining chamber 120. In this manner, the left wall 120L or the right wall 120R is cleaned. The posture of the workpiece holder 20 may be changed while machining chamber cleaning is being performed such that the direction of wind changes.

In step S75, the top surface air blower 93 and the bottom surface air blower 94 are driven again, and air is ejected from the top surface nozzle 93N and the bottom surface nozzle 94N. Accordingly, a large part of cut chips remaining in the machining chamber 120 are pushed into the exhaust port 128. At the end of step S75, ejection of air from the top surface nozzle 93N and the bottom surface nozzle 94N is stopped. In step S75, machining chamber cleaning is finished. Through the machining chamber cleaning, most part of cut chips generated in the machining chamber 120 by cutting of the cut object 1 is removed.

### [Functions of Slope and Duct Collecting Chamber]

Functions of the slope 127 and the duct collecting chamber 90 will now be described. As described above, the slope 127 is used for selecting large fragments of the cut object 1 generated by cutting of the cut object 1. Accordingly, it is possible to prevent clogging of the exhaust port 128 with excessively large fragments moved to the exhaust port 128. Similarly, in a case where the cut object 1 that is being machined falls off from the adaptor 5, the slope 127 prevents suction of the cut object 1 into the exhaust port 128. In this embodiment, since the slope 127 reduces suction of an excessively large object and the cut object 1 into the exhaust port 128, the exhaust port 128 does not include a mesh or the like that prevents passage of foreign substance. Accordingly, exhaust capacity of the cutting machine 10 is also enhanced.

The duct collecting chamber 90 prevents large objects such as large fragments of the cut object 1 from directly entering the exhaust duct 92. If such large objects directly enter the exhaust duct 92, the exhaust duct 92 might be clogged. The duct collecting chamber 90 temporarily receives such objects, for example, to thereby suppress clogging of the exhaust duct 92. To further suppress clogging of the exhaust duct 92, the opening direction of the duct connection hole 91 to which the exhaust duct 92 is connected intersects with the opening direction of the exhaust port 128. In this embodiment, the exhaust port 128 is smaller than the internal space of the duct collecting chamber 90 in a plan view. Accordingly, the flow velocity of exhaust air passing through the exhaust port 128 increases. Accordingly, exhaust capacity of the cutting machine 10 is enhanced.

### [Advantages of the Embodiment]

Next, advantages of the cutting machine 10 according to this embodiment will be described.

The cutting machine 10 according to this embodiment includes the workpiece holder 20 that holds the cut object 1, the machining chamber 120 that houses the workpiece holder 20, the cutter 50 that cuts the cut object 1 held by the workpiece holder 20, the main shaft mover 60 that moves the cutter 50, the cutter chamber 150, the exhaust duct 92 communicating with the machining chamber 120, and the intake port 152 communicating with the cutter chamber 150. The cutter chamber 150 includes the wall (top wall 120U of the machining chamber 120) separating the cutter chamber 150 from the machining chamber 120, and the rearward opening 125 that is open at the top wall 120U of the machining chamber 120 and allows at least a portion of the cutter 50 to pass therethrough. The cutter chamber 150 houses the main shaft mover 60. With this configuration, as described above, a flow F3 of wind occurs from the intake port 152 toward the machining chamber 120 by way of the cutter chamber 150 (see FIG. 3). The internal pressure of the cutter chamber 150 is higher than the internal pressure of the machining chamber 120. This suppresses entry of cut chips and others generated in the machining chamber 120 into the cutter chamber 150 by way of the rearward opening 125. The cutter chamber 150 accommodates the cutter 50 and the main shaft mover 60 that include movable parts and need to avoid dust as much as possible. With this configuration, it is possible to suppress occurrence of problems in the cutter 50 or the main shaft mover 60 caused by cut chips and others generated in the machining chamber 120 adhering to the cutter 50 or the main shaft mover 60.

The cutting machine 10 according to this embodiment includes the workpiece changer 70 including the adaptor storage 71 capable of accommodating the plurality of cut objects 1, and the conveyance device 72 that conveys at least one of the plurality of cut objects 1 accommodated in the adaptor storage 71 to the machining chamber 120. The cutting machine 10 further includes the changer chamber 170 including the wall (top wall 120U of the machining chamber 120) separating the changer chamber 170 from the machining chamber 120, and the forward opening 124 that is open at the top wall 120U of the machining chamber 120 and allows the cut object 1 conveyed by the conveyance device 72 to pass through. The changer chamber 170 houses the adaptor storage 71. The intake port 152 also communicates with the changer chamber 170. With this configuration, cut chips and others generated in the machining chamber 120 are less likely to enter the changer chamber 170 as described above. Thus, it is possible to suppress occurrence of problems in the workpiece changer 70 caused by cut chips and others generated in the machining chamber 120 adhering to the workpiece changer 70.

In this embodiment, the conveyance device 72 conveys the adaptor storage 71 to the machining chamber 120. With this configuration, the forward opening 124 for moving the adaptor storage 71 in and out of the machining chamber 120 needs to be relatively large. Thus, without any measures, cut chips and others generated in the machining chamber 120 are likely to enter the changer chamber 170. Accordingly, this configuration obtains large advantage by generating the flow F4 of wind from the intake port 152 toward the machining chamber 120 by way of the changer chamber 170.

The cutting machine 10 according to this embodiment includes the holder mover 30 including the support arm 31 supporting the workpiece holder 20 and that moves the support arm 31 to thereby move the workpiece holder 20. The cutting machine 10 further includes the driver chamber 130 including the wall (right wall 120R of the machining chamber 120) separating the driver chamber 130 from the machining chamber 120 and the slit 123 which is open at the right wall 120R of the machining chamber 120 and in which the support arm 31 of the holder mover 30 is inserted. The driver chamber 130 accommodates at least a portion of the holder mover 30. The intake port 152 also communicates with the driver chamber 130. With this configuration, as described above, cut chips and others generated in the machining chamber 120 are less likely to enter the driver chamber 130. Accordingly, it is possible to suppress occurrence of programs in the holder mover 30 caused by cut chips and others generated in the machining chamber 120 adhering to the holder mover 30.

The cutting machine 10 according to this embodiment includes the dustproof plate 36 fixed to the support arm 31 of the holder mover 30. The dustproof plate 36 covers at least a portion of the slit 123 and moves in the X-axis direction together with the support arm 31. This configuration enables the simple configuration as the dustproof plate 36 to further suppress entry of cut chips and others generated in the machining chamber 120 into the driver chamber 130. Since the dustproof plate 36 has a simple configuration, costs can be easily reduced.

In this embodiment, the dustproof plate 36 is fixed to a portion of the support arm 31 located in the machining chamber 120, and is located in the machining chamber 120. With this configuration, the dustproof plate 36 exhibits its advantages in the machining chamber 120. Thus, approach of the cut chips and others to the slit 123 can be suppressed beforehand.

In this embodiment, the exhaust port 128 is open in a portion (rear end of the bottom wall 120D herein) of the plurality of walls of the machining chamber 120 located rearward of the workpiece holder 20 in the X-axis direction, and the dustproof plate 36 covers a rear end portion of the slit 123 while the workpiece holder 20 is located in the moving range in cutting. With this configuration, during cutting of the cut object 1, the rear end portion of the slit 123 is covered with the dustproof plate 36. In the machining chamber 120, wind flows rearward with the arrangement of the exhaust port 128. Accordingly, cut chips easily move to a position rearward of the workpiece holder 20. The coverage of the rear end portion of the slit 123 during cutting of the cut object 1 further increases the effect of suppressing entry of the cut chips and others into the driver chamber 130.

On the other hand, while the workpiece holder 20 is located in the moving range in cutting, the dustproof plate 36 is located rearward of a front end portion of the slit 123. That is, at this time, the dustproof plate 36 does not cover a front portion of the slit 123. Since wind flows rearward in the machining chamber 120, even if the front portion of the slit 123 is not covered with the dustproof plate 36, the dustproof effect of the dustproof plate 36 is not likely to be impaired. On the other hand, when a portion of the slit 123 is appropriately open, wind flows from the driver chamber 130 to the machining chamber 120, and dustproof effect is enhanced. Further, with this configuration, the length of the dustproof plate 36 in the X-axis direction can be shortened, and thus, an increase of the length of the machining chamber 120 in the X-axis direction can be suppressed.

The cutting machine 10 according to this embodiment includes the top surface air blower 93 including the top surface nozzle 93N that ejects air along the top wall 120U of the machining chamber 120. With the top surface air blower 93, air ejected from the top surface nozzle 93N flows along the top wall 120U of the machining chamber 120. Thus, cut chips and others adhering to the top wall 120U of the machining chamber 120, which were conventionally difficult to remove, can be effectively removed.

In this embodiment, the exhaust port 128 is open at the bottom wall 120D of the machining chamber 120, and the top surface nozzle 93N ejects air so that the air reaches the exhaust port 128 along the top wall 120U and the rear wall 120Rr of the machining chamber 120. With this configuration, cut chips and others adhering to the rear wall 120Rr together with cut chips and others adhering to the top wall 120U can be pushed into the exhaust port 128.

In this embodiment, the exhaust port 128 is open along a connection portion of the bottom wall 120D connected to the rear wall 120Rr. With this configuration, air ejected from the top surface nozzle 93N and flowing along the top wall 120U and the rear wall 120Rr smoothly flows into the exhaust port 128. Thus, exhaust efficiency is high.

The cutting machine 10 according to this embodiment includes the bottom surface air blower 94 including the bottom surface nozzle 94N that ejects air such that the air reaches the exhaust port 128 along the bottom wall 120D of the machining chamber 120. With this configuration, cut chips and others on the bottom wall 120D of the machining chamber 120 can be effectively removed.

In this embodiment, the bottom surface nozzle 94N is located above the bottom wall 120D of the machining chamber 120, and ejects air obliquely downward toward the bottom wall 120D and toward the exhaust port 128. With this configuration, as described above, air hits the bottom wall 120D to thereby spread in the width direction of the bottom wall 120D (left-right direction in this embodiment). Accordingly, cleaning can be performed in a wider range than the width of the bottom surface nozzle 94N with respect to the width direction of the bottom wall 120D.

In this embodiment, the driver chamber 130 housing the holder mover 30 is located rightward of the machining chamber 120. The top surface nozzle 93N and the exhaust port 128 are offset rightward from the center line CL of the machining chamber 120 in the left-right direction. With this configuration, cut chips and others near the driver chamber 130 housing the holder mover 30 can be mainly removed. Thus, this configuration can also suppress occurrence of problems in the holder mover 30 caused by cut chips and others generated in the machining chamber 120 adhering to the holder mover 30.

In this embodiment, the Z-axis direction mover 60Z can move the cutter 50 to the position at which at least a portion of the cutter 50 is located above the workpiece holder 20 and below the top wall 120U of the machining chamber 120. The top surface nozzle 93N ejects air toward the cutter 50 moved to this position (i.e., projecting downward from the top wall 120U). With this configuration, air is ejected to the cutter 50 onto which cut chips are scattered by cutting of the cut object 1, and the cut chips can be removed.

In this embodiment, the bottom wall 120D of the machining chamber 120 includes the slope 127 including the exhaust port 128 and having upward inclination toward the exhaust port 128. With this configuration, large fragments of the cut object 1 that have fallen onto the bottom wall 120D of the machining chamber 120 do not move upward on the slope 127 even by suction from the exhaust port 128 or, even when large fragments fall onto the slope 127, the fragments slip down on the slope 127. Thus, large fragments are not sucked to the exhaust port 128. Thus, in the cutting machine 10 according to this embodiment, even in a case where fragments of the cut object 1 include large fragments, emission of air of the machining chamber 120 is not easily hindered. With this configuration, even when the cut object 1 is detached from the adaptor 5, suction of the cut object 1 into the exhaust port 128 can be prevented. In this embodiment, the slope 127 is a portion of the bottom wall 120D, but may occupy the entire bottom wall 120D.

In this embodiment, the bottom wall 120D of the machining chamber 120 includes the bottom portion 126 that are connected to the slope 127 to be bent relative to the slope 127. With this configuration, fragments and others slipped down on the slope 127 are likely to stop at the boundary between the slope 127 and the bottom portion 126. Thus, the user easily collects fragments and others slipped down on the slope 127. For example, in the case where the entire bottom wall 120D of the machining chamber 120 is the slope 127, fragments and others slipped on the slope 127 are likely to be accumulated in a front lower corner of the machining chamber 120 defined by the bottom wall 120D and the front wall 120F. In this configuration, the user cannot easily collect fragments and others slipped down on the slope 127. In this embodiment, the bottom portion 126 is substantially horizontal. Since the bottom portion 126 is substantially horizontal, easiness in stopping fallen objects and visual recognizability of the boundary between the slope 127 and the bottom portion 126 are both obtained. The bottom portion 126 may not be a substantially horizontal surface, and may be a slope having more gentle upward inclination than the slope 127 or a reversed slope declining to the rear.

In this embodiment, in a plan view, at least a portion of the slope 127 overlaps at least a portion of the workpiece holder 20. With this configuration, fragments of the cut object 1 and machining objects that have fallen off from the workpiece holder 20 fall onto the slope 127.

In this embodiment, the slope 127 is connected to the rear wall 120Rr of the machining chamber 120, and the rear edge of the exhaust port 128 is constituted by the rear wall 120Rr. With this configuration, the exhaust port 128 is located at rearmost portions of the slope 127 and the machining chamber 120. Thus, cut chips and others sucked to the exhaust port 128 do not overrun rearward of the exhaust port 128. Accordingly, cut chips and others can be efficiently collected.

The cutting machine 10 according to this embodiment includes the box-shaped duct collecting chamber 90 and the exhaust duct 92 connected to the duct connection hole 91. The duct collecting chamber 90 includes the upward opening 90U and the duct connection hole 91, and the upward opening 90U is connected to the exhaust port 128. As described above, this configuration can prevent a large-sized object such as large fragments of the cut object 1 from directly entering the exhaust duct 92. As a result, clogging of the exhaust duct 92 is suppressed.

In this embodiment, the exhaust port 128 is open upward, and the upward opening 90U of the duct collecting chamber 90 is also open upward. The duct collecting chamber 90 is located below the exhaust port 128. With this configuration, cut chips and others naturally fall into the duct collecting chamber 90 from the exhaust port 128 and the upward opening 90U. Thus, dust collection efficiency is high. The exhaust port 128 is not prohibited from opening toward the front, for example, and the duct collecting chamber 90 is not prohibited from being located above the exhaust port 128, for example.

In this embodiment, the duct connection hole 91 is open in a side wall (rear wall herein) of the duct collecting chamber. With this configuration, the opening direction of the duct connection hole 91 intersects with the opening direction of the exhaust port 128. Thus, it is possible to further suppress a large-sized object such as large fragments of the cut object 1 from directly entering the exhaust duct 92.

In this embodiment, the duct collecting chamber 90 has the internal space larger than the exhaust port 128 in a plan view. In other words, the exhaust port 128 is smaller than the internal space of the duct collecting chamber 90 in a plan view. Accordingly, as described above, the flow velocity of exhaust air passing through the exhaust port 128 increases, and exhaust capacity of the cutting machine 10 can be enhanced.

The cutting machine 10 according to this embodiment includes the main shaft air blower 55 including the main shaft nozzle 56 that ejects air toward the workpiece holder 20. The controller 100 of the cutting machine 10 includes the cutting controller 101 that controls the cutter 50 to cut the cut object 1, and the first blow controller 104A that controls the main shaft air blower 55 to eject air toward the workpiece holder 20 after cutting of the cut object 1 is finished. With this configuration, after cutting of the cut object 1 is finished, cut chips adhering to the cut object 1 and the workpiece holder 20 are removed, and the cut object 1 and the workpiece holder 20 are cleaned. The air blower that ejects air toward the workpiece holder 20 is not limited to the air blower included in the cutter 50, and may be located at any place.

The cutting machine 10 according to this embodiment includes the holder mover 30 and the Y-axis direction mover 60Y as movers that move the position of the main shaft nozzle 56 relative to the workpiece holder 20. The controller 100 includes the first movement controller 104C that controls the holder mover 30 and the Y-axis direction mover 60Y to move the position of the main shaft nozzle 56 relative to the workpiece holder 20 while the main shaft air blower 55 ejects air by control of the first blow controller 104A. With this configuration, the position of the workpiece holder 20 hit by air can be moved, and thus, a wide range of the workpiece holder 20 and the cut object 1 can be cleaned.

In this embodiment, the first movement controller 104C moves the position of the main shaft nozzle 56 relative to the workpiece holder 20 such that the movement path L1 of the main shaft nozzle 56 relative to the workpiece holder 20 draws a scanning line. With this configuration, since the position of the workpiece holder 20 hit by air can be moved in a scanning line, a region not blown by air does not remain in the workpiece holder 20 and the cut object 1.

The cutting machine 10 according to this embodiment includes the rotator 40 that rotates the workpiece holder 20 to thereby change the posture of the workpiece holder 20. The cut object 1 has a flat-plate shape including the two opposed surfaces 1A and 1B. The main shaft nozzle 56 ejects air in a predetermined ejection direction (downward herein). In addition, the first posture controller 104B of the controller 100 controls the rotator 40 to control the posture of the workpiece holder 20 such that the two opposed surfaces 1A and 1B of the cut object 1 intersects with the ejection direction of the main shaft nozzle 56 at a predetermined angle, after cutting of the cut object 1 is finished and before the main shaft air blower 55 ejects air by control of the first blow controller 104A. With this configuration, air can be blown to the cut object 1 at an angle at which cut chips and others adhering to the two opposed surfaces 1A and 1B of the cut object 1 are easily removed. The predetermined angle is 90 degrees herein. Air is blown to the two opposed surfaces 1A and 1B of the cut object 1 perpendicularly to the surfaces, the air velocity, the air pressure, or the air flow rate can be utilized most efficiently. The angle between the two opposed surfaces 1A and 1B of the cut object 1 and the ejection direction of the main shaft nozzle 56 is not limited to 90 degrees.

In this embodiment, the first posture controller 104B controls the rotator 40 to control the posture of the workpiece holder 20 such that the first surface 1A of the cut object 1 faces the main shaft nozzle 56, after cutting of the cut object 1 is finished and before the main shaft air blower 55 ejects air by control of the first blow controller 104A. The turning controller 104D controls the rotator 40 to change the posture of the workpiece holder 20 such that the second surface 1B of the cut object 1 faces the main shaft nozzle 56 while the main shaft air blower 55 ejects air by control of the first blow controller 104A. With this configuration, both the first surface 1A of the cut object 1 and the second surface 1B as a back surface of the first surface 1A can be cleaned. The expression "while the main shaft air blower 55 ejects air by control of the first blow controller 104A" may include a case where air ejection continues at this time and a case where air ejection is temporarily stopped at this time.

In this embodiment, the main shaft nozzle 56 of the main shaft air blower 55 also ejects air into the machining chamber 120. The controller 100 includes the second blow controller 105A that controls the main shaft air blower 55 to eject air into the machining chamber 120 after cutting of the cut object 1 is finished. With this configuration, after cutting of the cut object 1 is finished, cut chips adhering to the machining chamber 120 are removed, and the machining chamber 120 is cleaned. In this embodiment, machining chamber cleaning is performed after workpiece cleaning. Any one of machining chamber cleaning and workpiece cleaning may be performed. In a case where both machining chamber cleaning and workpiece cleaning are performed, the order is not particularly limited.

The controller 100 according to this embodiment includes the second movement controller 105C that controls the Y-axis direction mover 60Y to move the position of the main shaft nozzle 56 relative to the workpiece holder 20 while the main shaft air blower 55 ejects air by control of the second blow controller 105A. With this configuration, since the place of the machining chamber 120 hit by air can be moved, a wide range of the machining chamber 120 can be cleaned.

The controller 100 according to this embodiment includes the second posture controller 105B that controls the rotator 40 to set the posture of the workpiece holder 20 at a predetermined posture, after cutting of the cut object 1 is finished and before the main shaft air blower 55 ejects air by control of the second blow controller 105A. The main shaft nozzle 56 ejects air toward the workpiece holder 20. With this configuration, as described in the section of machining chamber cleaning, the direction of air can be changed by hitting air against the workpiece holder 20. Accordingly, air can be blown to an intended place of the machining chamber 120. In this embodiment, the posture of the workpiece holder 20 does not change during machining chamber cleaning, but may change once or multiple times.

In this embodiment, the main shaft nozzle 56 is located above the workpiece holder 20 and ejects air downward. The predetermined posture of the workpiece holder 20 is a posture in which the two opposed surfaces 1A and 1B of the cut object 1 held by the workpiece holder 20 tilt with respect to the bottom wall 120D of the machining chamber 120. Accordingly, the direction of air after hitting the workpiece holder 20 can be set at a direction obliquely intersecting with the bottom wall 120D. Accordingly, cut chips and others on the bottom wall 120D can be moved along the bottom wall 120D.

In this embodiment, the plurality of walls defining the machining chamber 120 include the front wall 120F (may include the machining chamber door 122) standing forward of the workpiece holder 20, and the predetermined posture of the workpiece holder 20 is a posture in which the two opposed surfaces 1A and 1B of the cut object 1 held by the workpiece holder 20 tilt downward toward the front. With this configuration, although the direction of air after hitting the workpiece holder 20 is originally forward but, when hitting the front wall 120F, the direction of air changes to rearward. Accordingly, air reaches the front wall 120F that is the forefront of the machining chamber 120. Thus, cleaning can be performed to the forefront of the machining chamber 120. In addition, thereafter, cut chips and others can be sent rearward.

In this embodiment, the second movement controller 105C controls the Y-axis direction mover 60Y to move the main shaft nozzle 56 leftward or rightward while the main shaft air blower 55 ejects air by control of the second blow controller 105A. Accordingly, above-described cleaning to the forefront of the machining chamber 120 can be performed in a wide range in the left-right direction.

In this embodiment, the second blow controller 105A controls the main shaft air blower 55 to eject air into the machining chamber 120, and then, controls the top surface air blower 93 and the bottom surface air blower 94 to eject air from the top surface nozzle 93N and the bottom surface nozzle 94N. With this configuration, cut chips and others that might have scattered into the machining chamber 120 by ejection of air from the main shaft air blower 55 can be conveyed to the exhaust port 128 by ejection of air from the top surface nozzle 93N and the bottom surface nozzle 94N. Accordingly, the inside of the machining chamber 120 can be further cleaned.

In this embodiment, the second blow controller 105A also controls the top surface air blower 93 and the bottom surface air blower 94 to eject air, before the second blow controller 105A controls the main shaft air blower 55 to eject air into the machining chamber 120. With this configuration, after the top wall 120U, the rear wall 120Rr, and the bottom wall 120D of the machining chamber 120 are made generally clean by ejection of air from the top surface nozzle 93N and the bottom surface nozzle 94N, the machining chamber 120 is cleaned by ejection of air from the main shaft nozzle 56. By taking these steps, scattering of cut chips adhering to the top wall 120U, the rear wall 120Rr, and the bottom wall 120D due to air ejected from the main shaft nozzle 56 is suppressed. Accordingly, cleanness in the machining chamber 120 is enhanced.

In the cutting machine 10 according to this embodiment, the tool container 80 capable of accommodating the plurality of cutting tools 6 is housed in the driver chamber 130 separated from the machining chamber 120 housing the workpiece holder 20. The cutter 50 is capable of gripping each of the cutting tools 6 accommodated in the tool container 80 and causes the gripped cutting tool 6 to cut the cut object 1 held by the workpiece holder 20. The main shaft mover 60 moves the cutter 50 between the driver chamber 130 and the machining chamber 120. This configuration suppresses adherence of cut chips generated in the machining chamber 120 to the cutting tools 6 accommodated in the tool container 80. Accordingly, it is possible to reduce drawbacks caused by cut chips adhering to the cutting tools 6, such as defective workmanship. In this embodiment, the tool container 80 is housed in the driver chamber 130, but may be housed in another chamber separated from the machining chamber 120.

In this embodiment, the driver chamber 130 and the machining chamber 120 are arranged in the Y-axis direction. The holder mover 30 includes the support arm 31 extending in the Y-axis direction and supporting the workpiece holder 20, the X-axis direction mobile object 32 housed in the driver chamber 130 and movable in the X-axis direction intersecting with the Y-axis direction, the support arm 31 being connected to the X-axis direction mobile object 32, and the X-axis direction driving motor 34 that moves the support arm 31 and the workpiece holder 20 in the X-axis direction by moving the X-axis direction mobile object 32 in the X-axis direction. The tool container 80 is supported by the X-axis direction mobile object 32. With this configuration, the support arm 31 does not support the tool container 80. Accordingly, the support arm 31 is not easily warped. As a result, accuracy in cutting is enhanced. In addition, since a load of cutting applied to the support arm 31 through the cut object 1 can be increased, the cutting amount per a unit time can be increased. Accordingly, a throughput of cutting is increased.

In this embodiment, the cutter 50 is located above the workpiece holder 20 and the tool container 80. The main shaft mover 60 includes the Y-axis direction mover 60Y that moves the cuter 50 in the Y-axis direction such that the cutter 50 moves between a position above the driver chamber 130 and a position above the machining chamber 120. The main shaft mover 60 also includes the Z-axis direction mover 60Z that moves the cutter 50 in the Z-axis direction. The holder mover 30 is capable of moving the tool container 80 to the tool grip position P1 below the movement path of the cutter 50 by the Y-axis direction mover 60Y. With this configuration, through the procedure described in the embodiment, the cutting tool 6 accommodated in the tool container 80 is gripped by the cutter 50, and the cutting tool 6 is returned to the tool container 80.

In this embodiment, the holder mover 30 is capable of moving the tool container 80 to the tool replacement position P2 located forward of the tool grip position P1. The cutting machine 10 according to this embodiment includes the tool replacement chamber 180 including the opening 183 that is open above the tool replacement position P2. When the holder mover 30 is driven to move the tool container 80 to the tool replacement position P2, the user is allowed to accommodate the cutting tool 6 in the tool container 80 through the opening 183 or take off the cutting tool 6 from the tool container 80. With this configuration, since the tool replacement chamber 180 is separated from the driver chamber 130, it is possible to prevent the user from contacting the holder mover 30 when the user changes the cutting tools 6. In addition, entry of foreign substance into the driver chamber 130 during replacement of the cutting tools 6, for example, is suppressed.

In this embodiment, the tool container 80 includes the plurality of accommodation holes 81 each capable of accommodating the cutting tool 6, and the plurality of accommodation holes 81 are arranged in a staggered pattern. Specifically, in the tool container 80, a plurality of rows (five rows 81A through 81E herein) in each of which some of the plurality of accommodation holes 81 are arranged in a predetermined arrangement direction (left-right direction herein), and adjacent two of the plurality of rows 81A through 81E are offset from each other in the arrangement direction. This configuration can increase accommodation efficiency of the cutting tool 6 relative to space.

The cutting machine 10 according to this embodiment includes the gripper 53 that grips the cutting tool 6 such that the cutting tool 6 projects downward in the Z-axis direction, the nozzle support member 57 supporting the main shaft nozzle 56, and the biasing member 58 that biases the main shaft nozzle 56. The nozzle support member 57 supports the main shaft nozzle 56 such that the main shaft nozzle 56 is movable between the end position (lower end position) Pd at a lower end in the Z-axis direction at a side of the gripper 53 and another position above the lower end position Pd in the Z-axis direction. The biasing member 58 biases the main shaft nozzle 56 supported by the nozzle support member 57 to hold the main shaft nozzle 56 at the lower end position Pd. With this configuration, while the main shaft nozzle 56 is not pushed by another member, the main shaft nozzle 56 is located at the lower end position Pd, which is the end position in the projection direction of the cutting tool 6, by biasing of the biasing member 58. Thus, at this time, the distance between the main shaft nozzle 56 and the cutting tool 6 is small. Accordingly, air can be strongly blown to the cutting tool 6. In addition, when the main shaft nozzle 56 is pushed upward by interference with another member, the main shaft nozzle 56 moves to a position above the lower end position Pd, that is, to another position in the opposite direction to the projection direction of the cutting tool 6a, against a biasing force of the biasing member 58. Accordingly, in the cutting machine 10 according to this embodiment, the main shaft nozzle 56 can be positioned closer to the cutting tool 6, and the main shaft nozzle 56 is less likely to be an obstacle.

In this embodiment, at least when the gripper 53 grips the cutting tool 6 accommodated in the tool container 80 or the gripper 53 releases the cutting tool 6, the main shaft nozzle 56 moves from the lower end position Pd. In this embodiment, the Z-axis direction mover 60Z moves the gripper 53 to a predetermined position (operating position Po) in the Z-axis direction at which the cutting tool 6 accommodated in the tool container 80 is gripped or released. The main shaft nozzle 56 is in contact with the tool container 80 in the state where the gripper 53 is at the operating position Po. Accordingly, the main shaft nozzle 56 is located above the lower end position Pd in the Z-axis direction against a biasing force of the biasing member 58. Thus, the main shaft nozzle 56 does not hinder gripping of the cutting tool 6 accommodated in the tool container 80 by the gripper 53 or releasing the cutting tool 6 from the gripper 53. In other words, the lower end position Pd can be set at a position at which the main shaft nozzle 56 contacts the tool container 80, and thus, the main shaft nozzle 56 can be located closer to the lower end of the cutting tool 6.

In this embodiment, the main shaft nozzle 56 includes the cut surface 56b located at the side wall and extending obliquely to the Z-axis direction. With this configuration, when an object pushes the cut surface 56b from the side, the cut surface 56b converts a part of the pressing force to an upward force in the Z-axis direction. Accordingly, the main shaft nozzle 56 moves upward. With this configuration, even in such a case where the object pushes the main shaft nozzle 56 from the side, the main shaft nozzle 56 can be moved.

### [Other Embodiments]

The cutting machine according to one embodiment has been described above. The technique disclosed here can be carried out as other embodiments. For example, in the embodiment described above, the intake ports are collectively located in one place. Alternatively, the intake ports may be dispersed in a plurality of places. For example, the intake ports may include a first intake port that is open in the cutter chamber, a second intake port that is open in the driver chamber, and a third intake port that is open in the changer chamber.

In the embodiment described above, the exhaust port 128 communicating with the exhaust duct 92 is located at the bottom wall 120D of the machining chamber 120. Alternatively, the position of the exhaust port is not particularly limited as long as the exhaust port is located in the machining chamber. The exhaust port may be located at the rear wall of the machining chamber, for example.

The configuration of the cutting machine is not particularly limited. For example, the cutting machine may not include the workpiece changer. For example, the cutter may be also moved in the front-rear direction. In this case, the holder may be immovably fixed. For example, the inside of the cutting machine may not be partitioned as in the embodiment described above.

Unless otherwise specified, the embodiments do not limit the present invention. For example, the cutting machine may not be a dental cutting machine for producing dental products. The cut object may not be held by the cutting machine through the adaptor, and may be directly held by the cutting machine.
A first aspect of the disclosure is a cutting machine comprising: a holder that holds a cut object; a machining chamber that houses the holder; a cutter that cuts the cut object held by the holder; a mover that moves the cutter; a first housing chamber that includes a first wall and a first opening and houses the mover, the first wall separating the first housing chamber from the machining chamber, the first opening being open at the first wall and allowing at least a portion of the cutter to pass therethrough; an exhaust duct communicating with the machining chamber; and an intake port communicating with the first housing chamber.
A second aspect of the disclosure is the cutting machine according to the first aspect, further comprising: a cut object changer including a storage and a conveyor, the storage being capable of accommodating a plurality of cut objects, the conveyor conveying at least one of the plurality of cut objects accommodated in the storage to the machining chamber; and a second housing chamber that includes a second wall and a second opening and houses the storage, the second wall separating the second housing chamber from the machining chamber, the second opening being open at the second wall and allowing the cut object conveyed by the conveyor to pass through the second opening, wherein the intake port also communicates with the second housing chamber.
A third aspect of the disclosure is the cutting machine according to the second aspect, wherein the conveyor conveys the storage to the machining chamber.
A fourth aspect of the disclosure is the cutting machine according to any one of the first to third aspects, further comprising: a driver that includes a support supporting the holder and moves the support to thereby move the holder; and a third housing chamber that includes a third wall and a third opening and houses at least a portion of the driver, the third wall separating the third housing chamber from the machining chamber, the third opening being open at the third wall, the support of the driver being inserted in the third opening, wherein the intake port also communicates with the third housing chamber.

### DESCRIPTION OF REFERENCE CHARACTERS

- 1: cut object
- 10: cutting machine
- 20: workpiece holder (holder)
- 30: holder mover (driver)
- 31: support arm (support)
- 50: cutter
- 60: main shaft mover (mover)
- 70: workpiece changer (cut object changer)
- 71: adaptor storage (storage)
- 72: conveyance device (conveyor)
- 92: exhaust duct
- 120: machining chamber
- 120R: right wall (third wall)
- 120U: top wall (first wall, second wall)
- 123: slit (third opening)
- 124: forward opening (second opening)
- 125: rearward opening (first opening)
- 128: exhaust port
- 130: driver chamber (third housing chamber)
- 150: cutter chamber (first housing chamber)
- 152: intake port
- 170: changer chamber (second housing chamber)

## Claims

1. A cutting machine (10) comprising:
a tool container (80) capable of accommodating a plurality of cutting tools (6);
a first chamber (130) housing the tool container (80);
a second chamber (120) separated from the first chamber (130) ;
a workpiece holder (20) housed in the second chamber (130) and holding a cut object (1);
a cutter (50) capable of gripping each of the cutting tools (6) accommodated in the tool container (80) and configured to cause the gripped cutting tool (6) to cut the cut object (1) held by the workpiece holder (20), and
a cutter mover (60) configured to move the cutter (50) between the first chamber (130) and the second chamber (120).

2. The cutting machine (10) according to claim 1, further comprising a holder mover (30), wherein
the first chamber (130) and the second chamber (120) are arranged in a predetermined first direction (Y);
the holder mover (30) includes
a support arm (31) extending in the first direction (Y) and supporting the workpiece holder (20);
a mobile object (32) housed in the first chamber (130) and movable in a second direction (X) intersecting with the first direction (Y), the support arm (31) being connected to the mobile object (32), and
a driving device (34) configured to move the mobile object (32) in the second direction (X) to move the support arm (31) and the workpiece holder (20) in the second direction (X), and wherein
the tool container (80) is supported by the mobile object (32) .

3. The cutting machine (10) according to claim 2, wherein
the cutter (50) is located above the workpiece holder (20) and the tool container (80);
the cutter mover (60) includes
a first direction mover (60Y) configured to move the cutter (50) in the first direction (Y) such that the cutter (50) moves between a position above the first chamber (130) and a position above the second chamber (120);
a second direction mover (60Z) configured to move the cutter 50 in an up-down direction, and wherein
the holder mover (30) is capable of moving the tool container (80) to a tool grip position (P1) below a movement path of the cutter (50) by the first direction mover (60Y).

4. The cutting machine (10) according to claim 3, further comprising a third chamber (180), wherein
the holder mover (30) is capable of moving the tool container (80) to a tool replacement position (P2) located forward of the tool grip position (P1), and
the third chamber (180) includes an opening (183) that is open above the tool replacement position (P2).

5. The cutting machine (10) according to any one of claims 1 to 4, wherein
the tool container (80) includes a plurality of accommodation holes (81) each capable of accommodating the cutting tool (6), and
the plurality of accommodation holes (81) are arranged in a staggered pattern.

6. The cutting machine (10) according to claim 5, wherein
the plurality of accommodation holes (81) includes a plurality of hole-rows (81A to 81E) arranged in a predetermined arrangement direction (Y), each of the plurality of hole-rows (81A to 81E) including a part of the plurality of accommodation holes (81), and
adjacent two of the plurality of hole-rows (81A to 81E) are offset from each other in the arrangement direction (Y).
